# EUROPEAN PATENT APPLICATION

(11) **EP 4 548 737 A1**
(43) Date of publication of application: **07.05.2025**
(21) Application number: 23831025.4
(22) Date of filing: 08.06.2023
(51) Int. Cl.: A01B 69/00, G05D 1/20

(54) **WORK VEHICLE AND METHOD FOR CONTROLLING WORK VEHICLE**

(30) Priority: 28.06.2022 JP 2022103963
(71) Applicant: Kubota Corporation, Osaka 556-8601 (JP)
(72) Inventor: KURODA, Koichi, Sakai-shi, Osaka 590-0908 (JP); KINOSHITA, Tomohiro, Sakai-shi, Osaka 590-0908 (JP); TAMAI, Takuya, Sakai-shi, Osaka 590-0908 (JP)
(74) Representative: Müller-Boré & Partner Patentanwälte PartG mbB
(86) International application number: PCT/JP2023/021410
(87) International publication number: WO 2024/004575

(57) **Abstract**

A work vehicle includes an exterior sensor to output sensor data indicating a distribution of geographic features around the work vehicle; and a controller. The controller controls self-traveling of the work vehicle in an inter-row travel mode of causing the work vehicle to travel along a target path between two adjacent crop rows that are detected based on the sensor data, and in a turning travel mode of causing the work vehicle to turn in a headland before and after the inter-row travel mode. In the turning travel mode, the controller calculates an amount of positional deviation and an amount of directional deviation of the work vehicle with respect to a target path in a next instance of the inter-row travel mode based on the sensor data; and switches from the turning travel mode to the inter-row travel mode upon satisfying a plurality of conditions including: a first condition that the amount of positional deviation is smaller than a first threshold; and a second condition that the amount of directional deviation is smaller than a second threshold.

## Description

### TECHNICAL FIELD

The present disclosure relates to work vehicles, and methods for controlling work vehicles.

### BACKGROUND ART

As attempts in next-generation agriculture, research and development of smart agriculture utilizing ICT (Information and Communication Technology) and IoT (Internet of Things) are under way. Research and development are also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.

On the other hand, development of movable units which autonomously move by utilizing distance sensors, e.g., LiDAR (Light Detection and Ranging) is also under way. For example, Patent Document 1 discloses an example of a work vehicle which performs self-traveling in between crop rows in a field by utilizing LiDAR.

### CITATION LIST

### PATENT LITERATURE

Patent Document 1: Japanese Laid-Open Patent Publication No. 2019-154379

### SUMMARY OF INVENTION

### TECHNICAL PROBLEM

In an environment in which trees or crops are distributed with a high density, e.g., vineyards or other orchards or forests, leaves thriving in upper portions of the trees create canopies, each of which serves as an obstacle or a multiple reflector against radio waves from a satellite. Such an environment hinders accurate positioning using a GNSS. In an environment where GNSS cannot be used, use of SLAM (Simultaneous Localization and Mapping), where localization and map generation simultaneously take place, might be possible. However, various challenges exist in the practical application of a work vehicle that uses SLAM to travel automatically in an environment with a multitude of trees. One challenge is that the distribution of tree leaves changes significantly with seasonal changes, making it impossible to continue using maps that were created in the past, for example.

### SOLUTION TO PROBLEM

A work vehicle according to an illustrative embodiment of the present disclosure performs self-traveling among a plurality of crop rows. The work vehicle includes: an exterior sensor to output sensor data indicating a distribution of geographic features around the work vehicle; and a controller to control self-traveling of the work vehicle. The controller controls self-traveling of the work vehicle in an inter-row travel mode of causing the work vehicle to travel along a target path between two adjacent crop rows that are detected based on the sensor data, and in a turning travel mode of causing the work vehicle to turn in a headland before and after the inter-row travel mode. In the turning travel mode, the controller calculates an amount of positional deviation and an amount of directional deviation of the work vehicle with respect to a target path in a next instance of the inter-row travel mode based on the sensor data. The controller switches from the turning travel mode to the inter-row travel mode upon satisfying a plurality of conditions including: a first condition that the amount of positional deviation is smaller than a first threshold; and a second condition that the amount of directional deviation is smaller than a second threshold.

General or specific aspects of the present disclosure may be implemented using devices, systems, methods, integrated circuits, computer programs, computer-readable storage media, or any combination thereof. The computer-readable storage media may be inclusive of volatile storage media, or non-volatile storage media. The devices each may include a plurality of devices. In the case where the devices each include two or more devices, the two or more devices may be included within a single apparatus, or divided over two or more separate apparatuses.

### ADVANTAGEOUS EFFECTS OF INVENTION

According to embodiments of the present disclosure, it is possible to realize work vehicles that each smoothly perform self-traveling among a plurality of crop rows (e.g., rows of trees) even in an orchard, a forest, or any other environment where GNSS-based positioning is difficult.

### BRIEF DESCRIPTION OF DRAWINGS

[FIG. **1**] A side view schematically showing an example of a work vehicle and an example of an implement linked to the work vehicle.
[FIG. **2**] A block diagram showing an example configuration of the work vehicle and the implement.
[FIG. **3A**] A schematic diagram of a LiDAR sensor as viewed in a lateral direction of the work vehicle.
[FIG. **3B**] A schematic diagram of a LiDAR sensor as viewed from vertically above.
[FIG. **4**] A block diagram showing an example configuration of the LiDAR sensor.
[FIG. **5**] A diagram schematically showing an example of an environment in which the work vehicle travels.
[FIG. **6**] A perspective view schematically showing an example of a surrounding environment of the work vehicle.
[FIG. **7A**] A diagram showing schematically an example of a travel path of the work vehicle.
[FIG. **7B**] A diagram showing schematically another example of a travel path of the work vehicle.
[FIG. **8**] A flowchart showing a control method for the work vehicle according to an embodiment of the present disclosure.
[FIG. **9**] A diagram for describing an example of a method of travel control for the work vehicle in an inter-row travel mode.
[FIG. **10A**] A diagram showing an example of an obstacle map that is generated based on sensor data.
[FIG. **10B**] A diagram showing another example of an obstacle map that is generated based on sensor data.
[FIG. **10C**] A diagram for describing a process of detecting two rows of trees based on an obstacle map.
[FIG. **11A**] A diagram for describing an example of a method of setting a turning coordinate system and a target point.
[FIG. **11B**] Another diagram for describing an example of a method of setting a turning coordinate system and a target point.
[FIG. **12**] A diagram for describing an operation of the work vehicle in a turning travel mode.
[FIG. **13**] A flowchart showing a specific example of a method of travel control by a controller.
[FIG. **14**] A diagram showing an example situation where the work vehicle has gone out of a row of trees.
[FIG. **15**] A flowchart showing an example of a control method for the work vehicle in the turning travel mode.
[FIG. **16A**] A diagram showing an example situation where two rows of trees in a next instance of inter-row travel are not detected.
[FIG. **16B**] A diagram showing an example situation where two rows of trees in a next instance of inter-row travel are detected.
[FIG. **17A**] A diagram for describing an amount of positional deviation and an amount of directional deviation of the work vehicle with respect to a target path.
[FIG. **17B**] A diagram for describing another method of calculating an amount of positional deviation of the work vehicle with respect to a target path.
[FIG. **18**] A diagram showing an example situation where the amount of positional deviation and the amount of directional deviation of the work vehicle with respect to a target path are smaller than their respective thresholds.
[FIG. **19A**] A diagram showing an example in which the curvature of the target path is equal to or greater than a third threshold.
[FIG. **19B**] A diagram showing an example in which the curvature of the target path is smaller than the third threshold.
[FIG. **20**] A diagram showing a variation of the flowchart shown in FIG. **15****.**
[FIG. **21A**] A diagram showing an example of an operation of modifying the target point.
[FIG. **21B**] A diagram showing another example of an operation of modifying the target point.
[FIG. **22**] A diagram showing an example where a turning path is modified while maintaining the target point.

### DESCRIPTION OF EMBODIMENTS

### (definition of terms)

In the present disclosure, a "work vehicle" means a vehicle for use in performing work in a work area. A "work area" is any place where work may be performed, e.g., a field, a mountain forest, or a construction site. A "field" is any place where agricultural work may be performed, e.g., an orchard, an agricultural field, a paddy field, a cereal farm, or a pasture. A work vehicle can be an agricultural machine such as a tractor, a rice transplanter, a combine, a vehicle for crop management, or a riding mower, or a vehicle for non-agricultural purposes such as a construction vehicle or a snowplow vehicle. A work vehicle may be configured so that an implement that is suitable for the content of work can be attached to at least one of its front and its rear. Traveling of a work vehicle that is made while it performs work by using an implement may be referred to as "tasked travel".

"Self-driving" means controlling the travel of a vehicle based on the action of a controller, rather than through manual operation of a driver. During self-driving, not only the travel of the vehicle, but also the task operation (e.g., the operation of the implement) may also be automatically controlled. A vehicle that is traveling via self-driving is said to be "self-traveling". The controller may control at least one of steering, adjustment of traveling speed, and starting and stopping of travel as are necessary for the travel of vehicle. In the case of controlling a work vehicle having an implement attached thereto, the controller may control operations such as raising or lowering of the implement, starting and stopping of the operation of the implement, and the like. Travel via self-driving includes not only the travel of a vehicle toward a destination along a predetermined path, but also the travel of merely following a target of tracking. A vehicle performing self-driving may travel based in part on a user's instruction. A vehicle performing self-driving may operate not only in a self-driving mode but also in a manual driving mode of traveling through manual operation of the driver. The steering of a vehicle that is based on the action of a controller, rather than manually, is referred to as "automatic steering". A portion or a whole of the controller may be external to the vehicle. Between the vehicle and a controller that is external to the vehicle, communication of control signals, commands, data, or the like may be performed. A vehicle performing self-driving may autonomously travel while sensing the surrounding environment, without any person being involved in the control of the travel of the vehicle. A vehicle that is capable of autonomous travel can travel in an unmanned manner. During autonomous travel, detection of obstacles and avoidance of obstacles may be performed.

An "exterior sensor" is a sensor that senses the external state of the work vehicle. Examples of exterior sensors include LiDAR sensors, cameras (or image sensors), laser range finders (also referred to as "range sensors"), ultrasonic sensors, millimeter wave radars, and magnetic sensors.

A "crop row" is a row of agricultural items, trees, or other plants that may grow in rows on a field, e.g., an orchard or an agricultural field, or in a forest or the like. In the present disclosure, a "crop row" is a notion that encompasses a "row of trees".

An "obstacle map" is local map data in which the position or a region of an object around the work vehicle is expressed in a predetermined coordinate system. A coordinate system defining an obstacle map may be a vehicle coordinate system that is fixed to the work vehicle, or a world coordinate system that is fixed to the globe (e.g. a geographic coordinate system), for example. An obstacle map may include information other than position (e.g., attribute information) of an object around the work vehicle. The obstacle map may be expressed in various formats, e.g., a grid map or a point cloud map.

### (embodiments)

Hereinafter, embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following embodiments are only exemplary, and the techniques according to the present disclosure are not limited to the following embodiments. For example, numerical values, shapes, materials, steps, orders of steps, etc., that are indicated in the following embodiments are only exemplary, and allow for various modifications so long as it makes technological sense. Any one implementation may be combined with another.

Hereinafter, as one example, an embodiment where the work vehicle is a tractor for use in agricultural work in a field such as an orchard will be described. Without being limited to tractors, the techniques according to the present disclosure are also applicable to other type of agricultural machines such as rice transplanters, combines, vehicles for crop management, or riding lawn mowers, for example. The techniques according to the present disclosure are also applicable to vehicles for non-agricultural purposes such as a construction vehicle or a snowplow vehicle.

### [1. configuration]

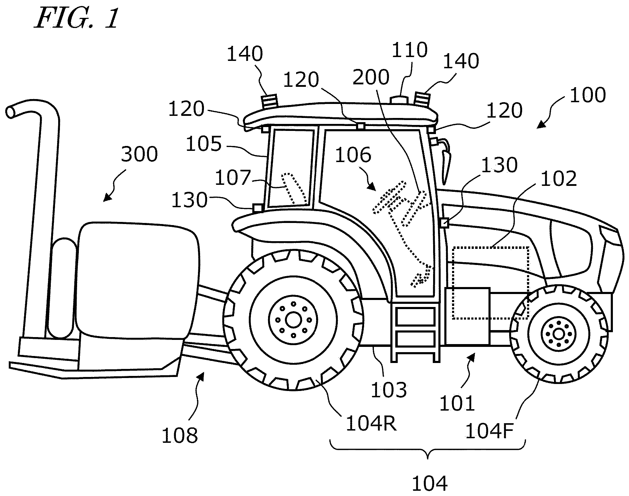

FIG. **1** is a side view schematically showing an example of the work vehicle **100** and an example of an implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** performs self-driving in an environment where a plurality of crop rows (e.g., rows of trees) are planted, e.g., an orchard such as a vineyard or an agricultural field.

As shown in FIG. **1****,** the work vehicle **100** includes a vehicle body **101,** a prime mover (engine) **102,** and a transmission **103.** On the vehicle body **101,** running gear, which includes wheels **104** with tires, and a cabin **105** are provided. The running gear includes four wheels **104,** and axles to cause the four wheels to rotate, and brakes to brake on each axle. The wheels **104** include a pair of front wheels **104F** and a pair of rear wheels **104R.** Inside the cabin **105,** a driver's seat **107,** a steering device **106,** an operational terminal **200,** and switches for manipulation are provided. The front wheels **104F** and/or the rear wheels **104R** may be replaced by a plurality of wheels with a track (crawlers), rather than wheels with tires, attached thereto.

The work vehicle **100** includes a plurality of exterior sensors to sense the surroundings of the work vehicle **100.** In the example of FIG. **1****,** the exterior sensors include a plurality of LiDAR sensors **140,** a plurality of cameras **120,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device, which is responsible for remote monitoring, for example. The images may be used to monitor the work vehicle **100** during unmanned driving. The cameras **120** may be provided according to the needs, and any number of them may be provided.

The LiDAR sensors **140** are one example of exterior sensors that output sensor data indicating a distribution of geographic features around the work vehicle **100.** In the example of FIG. **1****,** two LiDAR sensors **140** are disposed on the cabin **105,** at the front and the rear. The LiDAR sensors **140** may be provided at other positions (e.g., on a lower portion of a front face of the vehicle body **101**). While the work vehicle **100** is traveling, each LiDAR sensor **140** repeatedly outputs sensor data representing the distances and directions of measurement points on objects existing in the surrounding environment, or two-dimensional or three-dimensional coordinate values of such measurement points. The number of LiDAR sensors **140** is not limited to two, but may be one, or three or more.

The LiDAR sensor(s) **140** may be configured to output two-dimensional or three-dimensional point cloud data as sensor data. In the present specification, "point cloud data" broadly means data indicating a distribution of multiple reflection points that are observed with a LiDAR sensor(s) **140.** The point cloud data may include coordinate values of each reflection point in a two-dimensional space or a three-dimensional space or information indicating the distance and direction of each reflection point, for example. The point cloud data may include information of luminance of each reflection point. The LiDAR sensor(s) **140** may be configured to repeatedly output point cloud data with a pre-designated cycle, for example. Thus, the exterior sensors may include one or more LiDAR sensors **140** that output point cloud data as sensor data.

The sensor data that is output from the LiDAR sensor(s) **140** is processed by a controller that controls self-traveling of the work vehicle **100.** During travel of the work vehicle **100,** based on the sensor data that is output from the LiDAR sensor(s) **140,** the controller can consecutively generate an obstacle map indicating a distribution of objects existing around the work vehicle **100.** The controller may generate an environment map by joining together obstacle maps with the use of an algorithm such as SLAM, for example, during self-traveling. The controller can perform estimation of the position and orientation of the work vehicle **100** (i.e., localization) by matching the sensor data against the environment map.

The plurality of obstacle sensors **130** shown in FIG. **1** are provided at the front and the rear of the cabin **105.** The obstacle sensors **130** may be disposed at other positions. For example, one or more obstacle sensors **130** may be disposed at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles.

The work vehicle **100** further includes a GNSS unit **110.** GNSS is a collective term for satellite positioning systems such as the GPS (Global Positioning System), QZSS (Quasi-Zenith Satellite System, e.g., MICHIBIKI), GLONASS, Galileo, and BeiDou. A GNSS unit **110** receives satellite signals (also referred to as GNSS signals) that are transmitted from a plurality of GNSS satellites, and performs positioning based on the satellite signals. Although the GNSS unit **110** in the present embodiment is disposed above the cabin **105,** it may be disposed at any other position. The GNSS unit **110** includes an antenna to receive signals from the GNSS satellites, and a processing circuit. The work vehicle **100** in the present embodiment is used in environments where multiple trees grow to make it difficult to use a GNSS, e.g., a vineyard. In such environments, the LiDAR sensor(s) **140** is mainly used in positioning. However, in an environment where it is possible to receive GNSS signals, positioning may be performed by using the GNSS unit **110.** By combining the positioning based on the LiDAR sensor(s) **140** and the positioning based on the GNSS unit **110,** the stability or accuracy of positioning can be improved.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the front portion of the work vehicle **100.**

Although the implement **300** shown in FIG. **1** is a sprayer to spray a chemical agent onto a crop, the implement **300** is not limited to a sprayer. For example, any arbitrary implement such as a mower, a seeder, a spreader, a rake, a baler, a harvester, a plow, a harrow, or a rotary tiller may be connected to the work vehicle **100** for use.

The work vehicle **100** shown in FIG. **1** can be driven by human driving. Alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous travel, or by remote manipulation by a user.

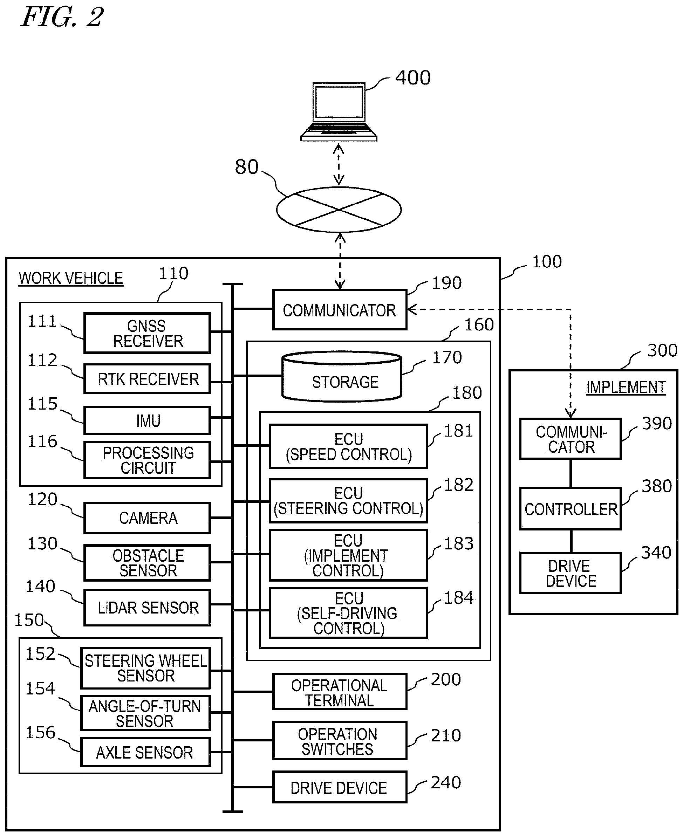

FIG. **2** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with a terminal device **400** for remote monitoring via a network **80.** The terminal device **400** may be any arbitrary computer, e.g., a personal computer (PC), a laptop computer, a tablet computer, or a smartphone, for example.

In addition to the GNSS unit **110,** the camera(s) **120,** the obstacle sensors **130,** the LiDAR sensor(s) **140,** and the operational terminal **200,** the work vehicle **100** in the example of FIG. **2** includes sensors **150** to detect the operating status of the work vehicle **100,** a travel control system **160,** a communicator **190,** operation switches **210,** and a drive device **240.** These component elements are communicably connected to one another via a bus.

The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and a axle sensor **156.** The travel control system **160** includes a storage **170** and a controller **180.** The controller **180** includes a plurality of electronic control units (ECU) **181 to 184.** The implement **300** includes a drive device **340,** a controller **380,** and a communicator **390.** Note that FIG. **2** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The GNSS unit **110** may perform positioning of the work vehicle **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be disposed near the work area where the work vehicle **100** performs tasked travel (e.g., at a position within 10 km of the work vehicle **100**). The reference station generates a correction signal of, for example, an RTCM format based on the satellite signals received from the plurality of GNSS satellites, and transmits the correction signal to the GNSS unit **110.** The RTK receiver **112,** which includes an antenna and a modem, receives the correction signal transmitted from the reference station. Based on the correction signal, the processing circuit **116** of the GNSS unit **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second. Note that the positioning method is not limited to being performed by using an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The GNSS unit **110** according to the present embodiment further includes the IMU **115**. The IMU **115** may include a **3-**axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100**. Based not only on the satellite signals and the correction signal but also on a signal that is output from the IMU **115**, the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111**. For example, the IMU **115** outputs a signal as frequently as approximately several ten times to several thousand times per second. Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **1****,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as a camera(s) to generate images for monitoring purposes. The infrared camera(s) may also be used for detection of obstacles at nighttime.

An obstacle sensor **130** detects objects around the work vehicle **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be disposed at different positions of the work vehicle **100.** Providing a multitude of obstacle sensors **130** can reduce blind spots in monitoring obstacles around the work vehicle **100.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** may be used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.** Measurement values from the axle sensor **156** can be utilized for the speed control by the controller **180.**

The drive device **240** includes various types of devices required to cause the work vehicle **100** to travel and to drive the implement **300.** For example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The storage **170** includes one or more storage media such as a flash memory or a magnetic disc. The storage **170** stores various data that is generated by the GNSS unit **110,** the camera(s) **120,** the obstacle sensor(s) **130,** the LiDAR sensor(s) **140,** the sensors **150,** and the controller **180.** The data that is stored by the storage **170** may include an environment map of the environment where the work vehicle **100** travels, an obstacle map that is consecutively generated during travel, and path data for self-driving. The storage **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, and the ECU **184** for self-driving control.

The ECU **181** controls the prime mover **102,** the transmission **103,** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communicator **190** to the implement **300.**

Based on data output from the GNSS unit **110,** the camera(s) **120,** the obstacle sensor(s) **130,** the LiDAR sensor(s) **140,** and the sensors **150,** the ECU **184** performs computation and control for achieving self-driving. For example, the ECU **184** estimates the position of the work vehicle **100** based on the data output from at least one of the GNSS unit **110,** the camera(s) **120,** and the LiDAR sensor(s) **140.** In a situation where a sufficiently high reception intensity exists for the satellite signals from the GNSS satellites, the ECU **184** may determine the position of the work vehicle **100** based only on the data output from the GNSS unit **110.** On the other hand, in an environment where obstructions, such as trees, that may hinder reception of the satellite signals exist around the work vehicle **100,** e.g., an orchard, the ECU **184** estimates the position of the work vehicle **100** by using the data output from the LiDAR sensor (s) **140** or the camera(s) **120.** During self-driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103,** or the brakes to change the speed of the work vehicle **100.** In response to the command to change the steering angle, the ECU **182** controls the steering device **106** to change the steering angle.

Through the actions of these ECUs, the controller **180** realizes self-traveling. During self-traveling, the controller **180** controls the drive device **240** based on the measured or estimated position of the work vehicle **100** and on the consecutively-generated target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network) . Instead of a CAN, faster communication methods such as Automotive Ethernet (registered trademark) may be used. Although the ECUs **181** to **184** are illustrated as individual blocks in FIG. **2****,** the function of each of the ECU **181** to **184** may be implemented by a plurality of ECUs. Alternatively, an onboard computer that integrates the functions of at least some of the ECUs **181** to **184** may be provided. The controller **180** may include ECUs other than the ECUs **181** to **184,** and any number of ECUs may be provided in accordance with functionality. Each ECU includes a processing circuit including one or more processors.

The communicator **190** includes a circuit communicating with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the respective communicators of the terminal device **400.** The network **80** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, and switching ON/OFF the implement **300.** At least a portion of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.**

The drive device **340** in the implement **300** shown in FIG. **2** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communicator **390,** the controller **380** causes the drive device **340** to perform various operations. Moreover, a signal that is in accordance with the state of the implement **300** can be transmitted from the communicator **390** to the work vehicle **100.**

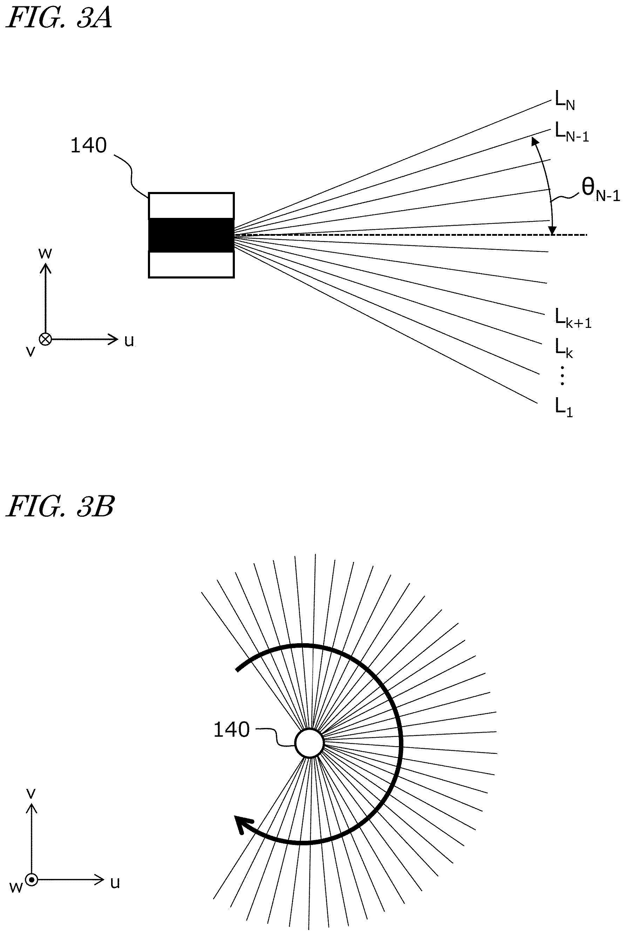

Next, with reference to FIG. **3A** and FIG. **3B****,** an exemplary configuration of the LiDAR sensor **140** will be described. The LiDAR sensor **140** in the present embodiment is a scan-type sensor capable of acquiring information on the distance distribution of objects within a space by laser beam scanning. FIG. **3A** is a schematic diagram of the LiDAR sensor **140** as viewed in a lateral direction of the work vehicle **100.** FIG. **3B** is a schematic diagram of the LiDAR sensor **140** as viewed from vertically above. In FIG. **3A** and FIG. **3B** are shown three axes u, v and w in a sensor coordinate system that is fixed to the LiDAR sensor **140,** which are orthogonal to one another. In FIG. **3A** and FIG. **3B****,** straight lines extending radially schematically represent the center axes (or traveling directions) of laser beams emitted from the LiDAR sensor **140.** Although each laser beam is collimated into parallel light, it has an angle of spread of several milliradians (e.g., 0.1 to 0.2 degrees). Therefore, the cross-sectional size (spot diameter) of each laser beam increases in proportion to distance from the LiDAR sensor **140.** For example, a light spot with a diameter of several centimeters may be formed 20 meters away from the LiDAR sensor **140.** In the figures, for simplicity, the spread of each laser beam is ignored, and only the center axis of the laser beam is illustrated.

The LiDAR sensor **140** in the example of FIG. **3A** is able to emit laser beams from a plurality of laser light sources that are arranged along the vertical direction, respectively at different angles of elevation. An angle of elevation is defined as an angle relative to the uv plane. In this example, the uv plane is essentially parallel to the horizontal plane. Note that, when the ground surface is inclined with respect to the horizontal plane, the uv plane and the horizontal plane will intersect. FIG. **3A** illustrates N laser beams L₁ to L_{N} being emitted. Herein, "N" is an integer of 1 or greater, and may be, e.g., 10 or greater, and 64, or even 100 or greater, for high-performance models. Among the plurality of laser beams, a k^{th} laser beam from the bottom has an angle of elevation θₖ. As one example, FIG. **3A** shows an angle of elevation **θ_{N-1}** of an N-1^{th} laser beam. The angle of elevation of any laser beam going upward from the uv plane is defined as a "positive angle of elevation", whereas the angle of elevation of any laser beam going downward from the uv plane is defined as a "negative angle of elevation".

A LiDAR sensor having an N of 1 may be referred to as a "two-dimensional LiDAR", while a LiDAR sensor having an N of 2 or more may be referred to as a "three-dimensional LiDAR". When N is 2 or more, the angle made by the first laser beam and an N^{th} laser beam is referred to as the "vertical viewing angle". The vertical viewing angle may be set in a range from about 20° to 60°, for example.

As shown in FIG. **3B****,** the LiDAR sensor **140** is able to change the outgoing directions (e.g., azimuth angles) of laser beams. FIG. **3B** shows the outgoing directions of the plurality of laser beams shown in FIG. **3A** as rotating around a rotation axis that is parallel to the w axis. The range of the outgoing directions (azimuth angles) of the laser beams may be 360°, or an angle range that is smaller than 360° (e.g., 210° or 270°). The range of azimuth angles of the outgoing directions of laser beams is referred to as the "horizontal viewing angle". The horizontal viewing angle may be set in a range from about 90° to 360°, for example. While rotating the outgoing directions of laser beams around a rotation axis that is parallel to the w axis, the LiDAR sensor **140** sequentially emits pulsed laser light (laser pulses) in directions of different azimuth angles. Thus, with pulsed laser light emitted at different angles of elevation and different azimuth angles, it is possible to measure the distance to each reflection point. Each reflection point corresponds to each individual point included in the point cloud data. The operation of measuring the distance to each reflection point while the azimuth angles of laser beams make one rotation around the rotation axis is referred to as one scan. Sensor data that is obtained through one scan includes data that is measured for every layer that is associated with a certain angle of elevation as shown in FIG. **3A****.** Therefore, the greater the number of layers is, the greater the number of points in the point cloud that are obtained through one scan for the same environment. The LiDAR sensor **140** repeats scan operations with a frequency of about 1 to 20 times per second, for example. During one scan operation, 100,000 or more pulses of laser light may be emitted in different directions, for example.

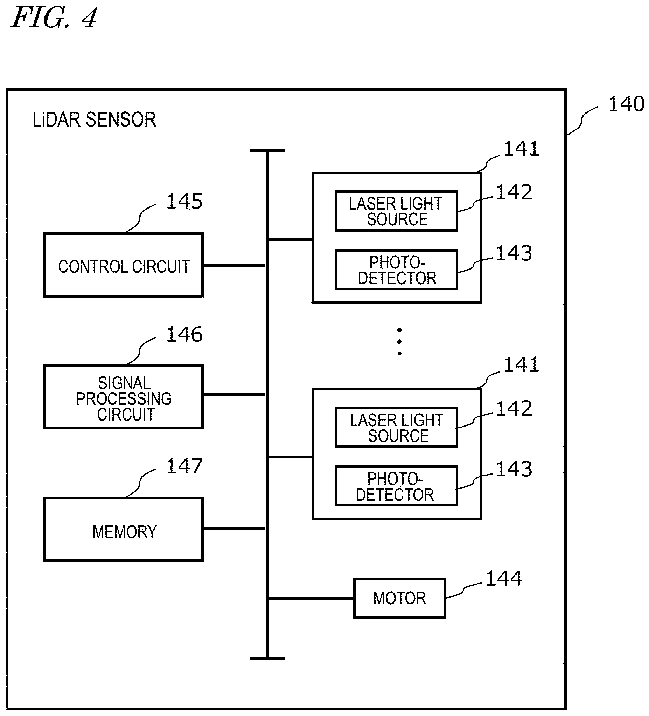

FIG. **4** is a block diagram showing an exemplary schematic configuration of the LiDAR sensor **140.** As shown in FIG. **4****,** the LiDAR sensor **140** includes a plurality of laser units **141,** an electric motor **144,** a control circuit **145,** a signal processing circuit **146,** and a memory **147.** Each laser unit **141** includes a laser light source **142** and a photodetector **143.** Each laser unit **141** may include optics such as a lens(es) and a mirror(s), but they are omitted from illustration. By rotating a mirror that is placed on the optical path of a laser beam emitted from each laser light source **142,** for example, the motor **144** changes the direction of the laser beam emitted from the respective laser light source **142.**

Each laser light source **142** includes a laser diode, and emits a pulsed laser beam of a predetermined wavelength in response to a command from the control circuit **145.** The wavelength of the laser beam may be a wavelength that is included in the near-infrared wavelength region (approximately 700 nm to 2.5 µm), for example. The wavelength used depends on the material of the photoelectric conversion element used for the photodetector **143.** In the case where silicon (Si) is used as the material of the photoelectric conversion element, for example, a wavelength around 900 nm may be mainly used. In the case where indium gallium arsenide (InGaAs) is used as the material of the photoelectric conversion element, a wavelength of not less than 1000 nm and not more than 1650 nm may be used, for example. Note that the wavelength of the laser beam is not limited to the near-infrared wavelength region. In applications where influences of ambient light are not a problem (e.g., for nighttime use), a wavelength included in the visible region (e.g., approximately 400 nm to 700 nm) may be used. Depending on the application, the ultraviolet wavelength region may also be used. In the present specification, any radiation in the ultraviolet, visible light, and infrared wavelength regions in general is referred to as "light".

Each photodetector **143** is a device to detect laser pulses that are emitted from the laser light source **142** and reflected or scattered by an object. The photodetector **143** includes a photoelectric conversion element such as an avalanche photodiode (APD), for example. The photodetector **143** outputs an electrical signal which is in accordance with the amount of received light.

In response to a command from the control circuit **145,** the motor **144** rotates the mirror that is placed on the optical path of a laser beam emitted from each laser light source **142.** This realizes a scan operation that changes the outgoing directions of laser beams.

The control circuit **145** controls emission of laser pulses by the laser light sources **142,** detection of reflection pulses by the photodetectors **143,** and rotational operation by the motor **144.** The control circuit **145** can be implemented by a circuit that includes a processor, e.g., a microcontroller unit (MCU), for example.

The signal processing circuit **146** is a circuit to perform computations based on signals that are output from the photodetectors **143.** The signal processing circuit **146** uses ToF (Time of Flight) techniques to calculate a distance to an object that has reflected a laser pulse emitted from a laser light source **142,** for example. ToF techniques include direct ToF and indirect ToF. Under direct ToF, the time from the emission of a laser pulse from the laser light source **142** until reflected light is received by the photodetector **143** is directly measured to calculate the distance to the reflection point. Under indirect ToF, a plurality of exposure periods are set in the photodetector **143,** and the distance to each reflection point is calculated based on a ratio of light amounts detected in the respective exposure periods. Either the direct ToF or indirect ToF method may be used. The signal processing circuit **146** generates and outputs sensor data indicating the distance to each reflection point and the direction of that reflection point, for example. Furthermore, the signal processing circuit **146** may calculate coordinates (u,v) or (u,v,w) in the sensor coordinate system based on the distance to each reflection point and the direction of that reflection point, and include these in the sensor data for output.

Although the control circuit **145** and the signal processing circuit **146** are two separate circuits in the example of FIG. **4****,** they may be implemented as a single circuit.

The memory **147** is a storage medium to store data that is generated by the control circuit **145** and the signal processing circuit **146.** For example, the memory **147** stores data that associates the emission timing of a laser pulse emitted from each laser unit **141,** the outgoing direction, the reflected light intensity, the distance to the reflection point, and the coordinates (u,v) or (u,v,w) in the sensor coordinate system. Such data is generated each time a laser pulse is emitted, and recorded to the memory **147.** The control circuit **145** outputs such data with a predetermined cycle (e.g., the length of time required to emit a predetermined number of pulses, a half scan period, or one scan period). The output data is recorded in the storage **170** of the work vehicle **100.**

The LiDAR sensor **140** outputs sensor data with a frequency of about 1 to 20 times per second, for example. This sensor data may include the coordinates of multiple points expressed by the sensor coordinate system, and time stamp information. The sensor data may include the information of distance and direction toward each reflection point but not include coordinate information. In such cases, the controller **180** performs conversion from the distance and direction information into coordinate information.

Note that the method of distance measurement is not limited to the ToF techniques, but other methods such as the FMCW (Frequency Modulated Continuous Wave) techniques may also be used. In the FMCW techniques, light whose frequency is linearly changed is emitted, and distance is calculated based on the frequency of beats that occur due to interferences between the emitted light and the reflected light.

As described above, the LiDAR sensor(s) **140** according to the present embodiment may be scan-type sensors, which acquire information on the distance distribution of objects in space by scanning a laser beam. However, the LiDAR sensors **140** are not limited to scan-type sensors. For example, the LiDAR sensor(s) **140** may be flash-type sensors, which acquire information on the distance distribution of objects in space by using light diffused over a wide area. A scan-type LiDAR sensor uses a higher intensity light than does a flash-type LiDAR sensor, and thus can acquire distance information at a greater distance. On the other hand, flash-type LiDAR sensors are suitable for applications that do not require intense light because they are simple in structure and can be manufactured at low cost.

### [2. operation]

Next, an operation of the work vehicle **100** will be described.

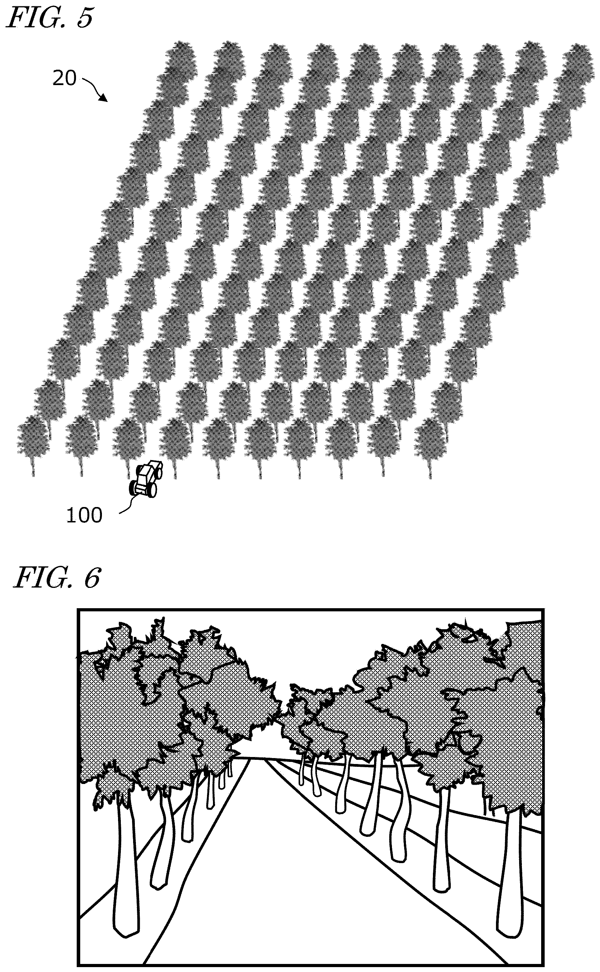

FIG. **5** is a diagram schematically showing an example of an environment in which the work vehicle **100** travels. FIG. **6** is a perspective view schematically showing an example of the surrounding environment of the work vehicle **100.** In this example, while traveling between rows of trees **20** (i.e., crop rows) in an orchard such as a vineyard, the work vehicle **100** uses the implement **300** to perform predetermined tasks (e.g., spreading chemical agents, mowing, preventive pest control, or the like). The sky over an orchard is obstructed by branches and leaves, thus hindering self-traveling using a GNSS. In an environment where a GNSS cannot be used, it may be conceivable to travel while performing localization through matching between an environment map that is created in advance and the sensor data. However, in a field such as an orchard, the outer shapes of the leaves of trees or other crops or hedges may change significantly with seasons, thus making it difficult to continue using an environment map that is created in advance. Moreover, in a conventional self-driving agricultural machine, information such as positions of crop rows, shape of the field, and positions of headland areas is set in advance, and a path for self-traveling is generated based on such information. In a vast field, however, it is considerable work to set the positions of crop rows in advance.

Therefore, the controller **180** according to the present embodiment detects two crop rows existing on opposite sides of the work vehicle **100** based on sensor data that is output from the LiDAR sensor(s) **140,** and causes the work vehicle **100** to travel along a path between the two crop rows. Furthermore, upon detecting an end of a crop row based on the sensor data, the controller **180** sets a coordinate system for turning travel and a target point for the turning travel, and causes the work vehicle **100** to turn toward the target point based on the coordinate system. During turning travel, based on the sensor data, the controller **180** detects two adjacent crop rows that are near the target point, and sets a target path for a next instance of inter-row travel in between these two crop rows. The controller **180** calculates an amount of positional deviation and an amount of directional deviation of the work vehicle **100** with respect to the target path based on the sensor data. When a plurality of conditions are satisfied, including: a first condition that the amount of positional deviation is smaller than a first threshold; and a second condition that the amount of directional deviation is smaller than a second threshold, the controller **180** ends control of turning travel, and starts control of travel between crop rows. Such an operation allows for solving the aforementioned problem, and smoothly performing self-traveling among a plurality of crop rows and making turns.

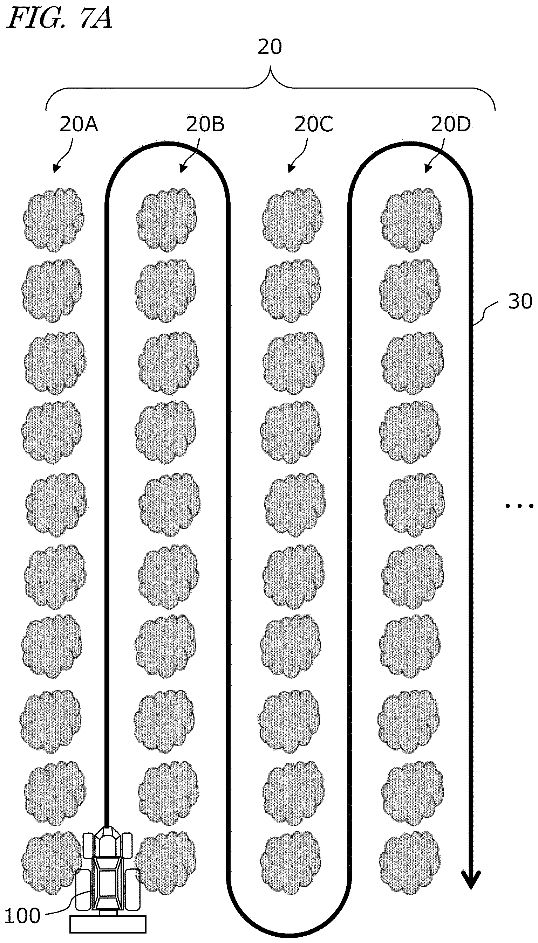

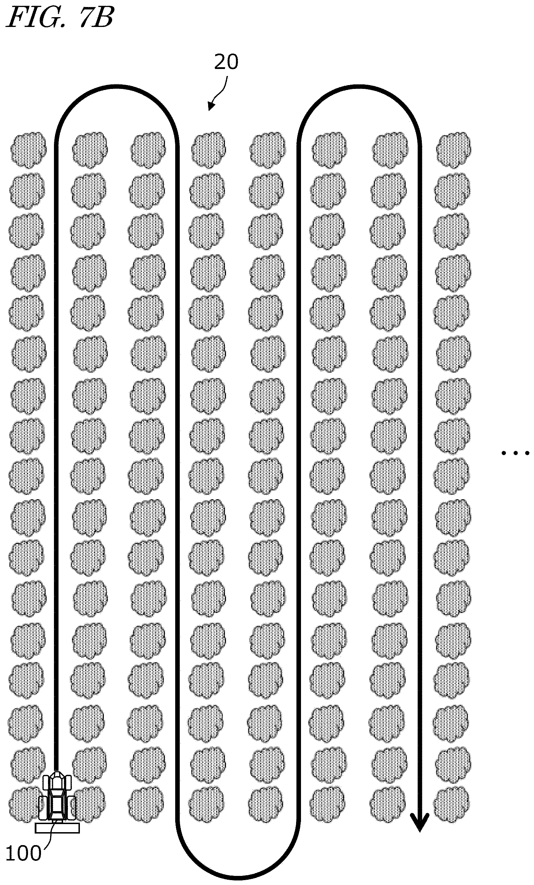

FIG. **7A** is a diagram showing schematically an example of a travel path **30** of the work vehicle **100.** The work vehicle **100** travels among rows of trees **20** along the path **30** as illustrated. Although FIG. **7A** illustrates any line segment included in the path **30** to be a straight line, the path along which the work vehicle **100** actually travels may include meandering portions. Now, the plurality of rows of trees **20** are sequentially designated as a first row of trees **20A,** a second row of trees **20B,** a third row of trees **20C,** a fourth row of trees **20D,** etc., from the end. In the example of FIG. **7A****,** the work vehicle **100** first travels between the first row of trees **20A** and the second row of trees **20B,** and upon completing this travel, turns right to travel between the second row of trees **20B** and the third row of trees **20C** in the opposite direction. Once the travel between the second row of trees **20B** and the third row of trees **20C** is completed, it further turns left to travel between the third row of trees **20C** and the fourth row of trees **20D.** Thereafter, by repeating a similar operation, it travels to the final end of the path **30,** which will be in between the last two rows of trees. In the case where the interval between two adjacent rows of trees is short, as shown in FIG. **7B****,** it may travel so as to go along every other row. In this case, after the travel between the last two rows of trees is completed, an operation of traveling between untraveled rows of trees, so as to go along every other row, may be performed. Such travel is automatically performed by the work vehicle **100,** based on sensor data that is output from the LiDAR sensor(s) **140.**

At timings when the GNSS unit **110** is able to receive a GNSS signal, positioning may be conducted based on the GNSS signal. For example, at any timing of turning around along the path **30** illustrated in either FIG. **7A** or FIG. **7B****,** no leaves exist to obstruct the GNSS signal, and therefore positioning based on the GNSS signal is possible.

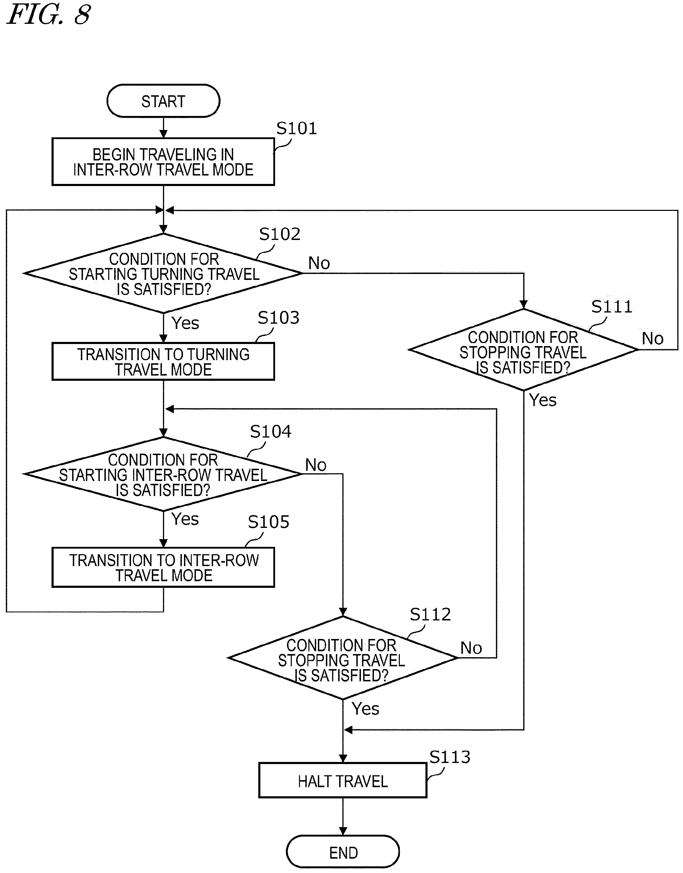

FIG. **8** is a flowchart showing a control method for a work vehicle according to the present embodiment. The controller **180** of the work vehicle **100** according to the present embodiment controls self-traveling of the work vehicle **100** in an inter-row travel mode of causing the work vehicle **100** to travel along a target path between two adjacent rows of trees, and a turning travel mode of causing the work vehicle **100** to turn in a headland before and after the inter-row travel mode. A headland is a region between an end of each row of trees and the boundary of the orchard.

In the example of FIG. **8****,** at step **S101,** first, the controller **180** starts travel control in the inter-row travel mode. In the inter-row travel mode, based on the sensor data being consecutively output from the LiDAR sensor(s) **140,** the controller **180** detects two rows of trees existing on opposite sides of the work vehicle **100,** and while setting a target path in between the two rows of trees, causes the work vehicle **100** to travel along the target path.

At step **S102,** the controller **180** determines whether the condition for starting turning travel is satisfied for not. If the condition for starting turning travel is satisfied, control proceeds to step **S103.** If the condition for starting turning travel is not satisfied, control proceeds to step **S111.**

The determination of step **S102** may be made through the following flow, for example. First, upon detecting an end of at least the row of trees corresponding to the turning direction (right or left) between the two adjacent rows of trees, the controller **180** sets a coordinate system for turning travel and a target point of turn. Hereinafter, a coordinate system for turning travel may be referred to as a "turning coordinate system". A turning coordinate system is a coordinate system that is fixed to the ground surface, and is used to control the turning travel. The target point is an entrance point of a next instance of inter-row travel. After setting the turning coordinate system and the target point of turn, once the work vehicle **100** passes an end of the row of trees, the controller **180** determines that the condition for starting turning travel is satisfied, and transitions to the turning travel mode (step **S103**). If the work vehicle **100** has not passed an end of the row of trees, the controller **180** determines that the condition for starting turning travel is not satisfied, and proceeds to step **S111.**

At step **S111,** the controller **180** determines whether the condition for stopping travel is satisfied or not. For example, the controller **180** determines that the condition for stopping travel is satisfied and halts the work vehicle **100**, if any of the following is true: (a) when an obstacle is detected based on sensor data; (b) when the fuel of the work vehicle **100** is smaller than a predetermined amount; (c) when the amount of material possessed by the work vehicle **100** is smaller than a predetermined amount; (d) when a problem of the work vehicle **100** is detected; (e) when an instruction to halt is received from the user; (f) when an angle of tilt of the work vehicle **100** is larger than a predetermined value; and (g) when work to be performed by the work vehicle **100** is finished (step **S113**). As used herein, a "material" is a substance to be consumed in agricultural work. Examples of materials include chemical agents such as sprayer liquids, fertilizers, seedlings of crops, and seeds, for instance. A material may be carried on the work vehicle **100** or the implement **300.** An example of when an angle of tilt of the work vehicle **100** is larger than a predetermined value may be a case where the work vehicle **100** is traveling on a steep uphill or a steep downhill. The controller **180** can determine whether each case of (a) to (g) above is true or not by relying on various sensors provided on the work vehicle **100.** If the condition for stopping travel is not satisfied, control returns to step **S102.**

Once transitioning to the turning travel mode at step **S103,** the controller **180** causes the work vehicle **100** to travel along a turning path that is set on the turning coordinate system. Specifically, based on the sensor data being consecutively output from the LiDAR sensor(s) **140,** the controller **180** causes the work vehicle **100** to travel along the turning path, while performing localization for the work vehicle **100** on the turning coordinate system. In the turning travel mode, the controller **180** may utilize not only the sensor data but also utilize a signal that is output from the GNSS receiver **111** and/or a signal that is output from the IMU **115** to perform positioning. While the work vehicle **100** is performing turning travel, the controller **180** determines whether the condition for starting inter-row travel is satisfied or not (step **S104**). For example, when the work vehicle **100** has reached near the target point of turn so that any deviation in the position and orientation of the work vehicle **100** with respect to the target path in a next instance of the inter-row travel mode has become sufficiently small, it may be determined that the condition for starting inter-row travel is satisfied. Specifically, the controller **180** determines that the condition for starting inter-row travel is satisfied upon satisfying a plurality of conditions, including: (1) a first condition that the amount of positional deviation is smaller than a first threshold; and (2) a second condition that the amount of directional deviation is smaller than a second threshold. If the condition for starting inter-row travel is satisfied, the controller **180** switches from the turning travel mode to the inter-row travel mode (step **S105**). If the condition for starting inter-row travel is not satisfied, control proceeds to step **S112.**

At step **S112,** the controller **180** determines whether the condition for stopping travel is satisfied or not. This process of determination is similar to the process of determination at step **S111.** For example, the controller **180** determines that the condition for stopping travel is satisfied and halts the work vehicle **100**, if any of the following is true: (a) when an obstacle is detected based on sensor data; (b) when the fuel of the work vehicle **100** is smaller than a predetermined amount; (c) when the amount of material possessed by the work vehicle **100** is smaller than a predetermined amount; (d) when a problem of the work vehicle **100** is detected; (e) when an instruction to halt is received from the user; (f) when an angle of tilt of the work vehicle **100** is larger than a predetermined value; and (g) when work to be performed by the work vehicle **100** is finished (step **S113**). If the condition for stopping travel is not satisfied, control returns to step **S104.**

After transitioning to the inter-row travel mode at step **S105,** control returns to step **S102.** Thereafter, similar operations are repeated until the last instance of inter-row travel is finished. Through the above operation, self-traveling between rows of trees **20** is achieved. The above control is realized by the ECU **184** of the controller **180.**

Through the above operation, while repeating the inter-row travel and the turning travel, the work vehicle **100** can perform self-traveling from the start point to the end point of a row of trees **20.** According to the present embodiment, even in an orchard or other environments where highly accurate positioning using a GNSS is difficult, it is possible to perform agricultural tasks such as spreading of a chemical agent while performing self-traveling.

Hereinafter, more specific examples of the operation of the work vehicle **100** according to the present embodiment will be described.

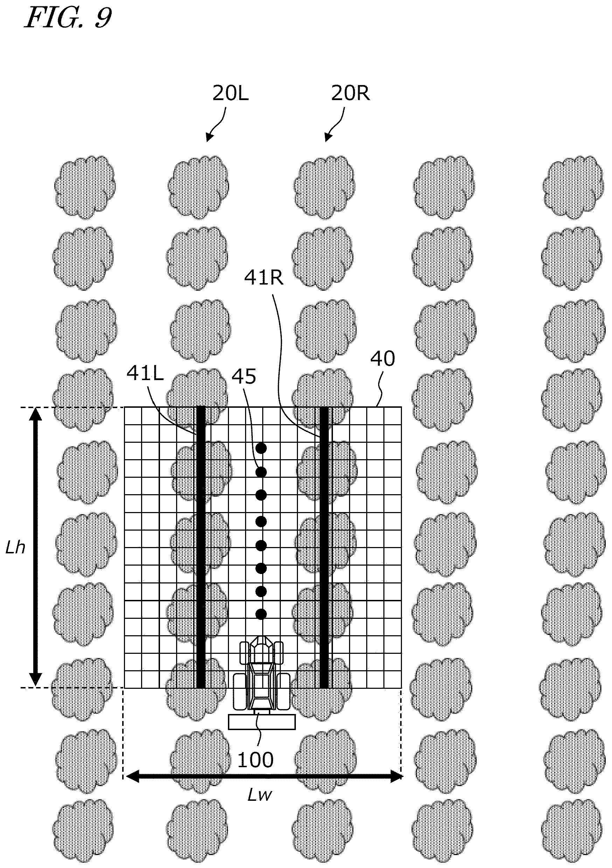

FIG. **9** is a diagram for describing a method of travel control for the work vehicle **100** in the inter-row travel mode. While traveling between two adjacent rows of trees **20R** and **20L,** the work vehicle **100** scans the surrounding environment with a laser beam, by using the LiDAR sensor(s) **140.** As a result, data indicating a distance distribution of objects existing in the environment is acquired. The data indicating the distance distribution is converted into two-dimensional or three-dimensional point cloud data, for example, and output as sensor data. During travel of the work vehicle **100,** the controller **180** consecutively generates the obstacle map **40** based on the sensor data that is output from the LiDAR sensor(s) **140.** The obstacle map **40** represents a distribution of objects in a vehicle coordinate system that is fixed to the work vehicle **100.** The obstacle map **40** has a predetermined length **Lh** and width **Lw.** The length **Lh** is a longitudinal size corresponding to the traveling direction of the work vehicle **100.** The width **Lw** is a lateral size that is perpendicular to both of the traveling direction of the work vehicle **100** and the vertical direction.

In the example shown in FIG. **9****,** the controller **180** detects two rows of trees **20R** and **20L** existing on opposite sides of the work vehicle **100,** based on the obstacle map **40.** Specifically, the controller **180** subjects the obstacle map **40** to a Hough transform or other processing to derive approximate straight lines (line segments) **41R** and **41L** for the rows of trees **20R** and **20L.** The controller **180** sets a target path **45** between the approximate straight lines **41R** and **41L** (e.g., in the middle). In a case where the plurality of trees in the rows of trees **20R** and **20L** are distributed in curved shapes, the controller **180** may derive approximate curves rather than approximate straight lines, and set the target path **45** between such approximate curves. The target path **45** may be set in a relatively short range beginning at the position of the work vehicle **100** (e.g., a range on the order of several meters). The target path **45** may be defined by a plurality of waypoints. Each waypoint may include information of the position and orientation (or velocity) of the point to be passed by the work vehicle **100.** The interval between waypoints may be set to a value of, e.g., several ten centimeters (cm) to several meters (m). Thus, the controller **180** may be configured to set a target path at a midpoint between two rows of trees (i.e., crop rows) that are detected based on the sensor data. Note that the controller **180** may set a target path at a position that is offset from a midpoint between the two detected rows of trees. For example, depending on the kind or content of work of the implement **300,** it may be preferable for the work vehicle **100** to travel at a position that is deviated from a midpoint between the two rows of trees. In such cases, the controller **180** may set an amount of offset from the midpoint between the two rows of trees based on the content of work to be performed by the work vehicle **100** during travel and/or the type of the implement **300** that is linked to the work vehicle **100.** The controller **180** can acquire information on the content of work and the type of the implement **300** from the storage **170,** the implement **300,** or other devices, for example.

The controller **180** causes the work vehicle **100** to travel along the target path **45** that has been set. For example, the controller **180** performs steering control for the work vehicle **100** so as to minimize the deviation of the position and orientation of the work vehicle **100** with respect to the target path **45.** As a result, the work vehicle **100** can be made to travel along the target path **45.**

The obstacle map **40** shown in FIG. **9** is an occupancy grid map including a plurality of grid cells that are arranged in a two-dimensional array. Although FIG. **9** illustrate 16×16=256 grid cells, the number of grid cells may be arbitrary. Without being limited to the illustrated example, the obstacle map **40** may be a map (e.g., a voxel map) indicating a three-dimensional distribution of geographic features existing around the work vehicle **100,** for example. Alternatively, the obstacle map **40** may be a map data of other formats, e.g., a point cloud map.

The controller **180** may generate the obstacle map **40** by eliminating data of any points that are estimated as corresponding to unwanted objects, e.g., the ground surface and weeds, from the sensor data that is output from the LiDAR sensor(s) **140.** In a case where three-dimensional point cloud data is output as the sensor data, from the point cloud data, the controller **180** may extract only the data of points whose height from the ground surface is within a predetermined range (e.g., within a range of 0.1 m to 1.5 m), and generate the obstacle map from the extracted data of points. By such a method, an obstacle map indicating a distribution of trees (mainly the trunks) can be generated.

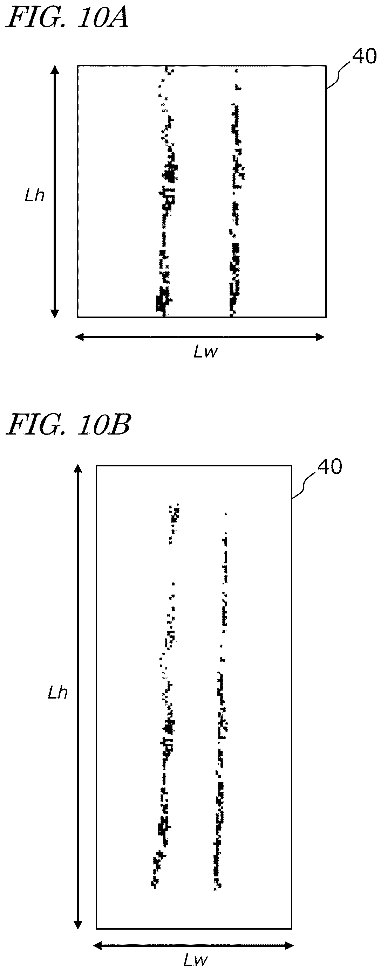

FIG. **10A** is a diagram showing an example of the obstacle map **40** being generated based on sensor data. In the obstacle map **40** shown in FIG. **10A****,** grid cells in which objects exist are depicted as dark, while grid cells in which no objects exist are depicted as blank. The dark grid cells indicate the presence of objects such as tree trunks or leaves. The obstacle map **40** may be expressed by data in which numerical value "1" is assigned to any grid cell in which an object exists and numerical value "0" is assigned to any grid cell in which no object exists, for example. The controller **180** may be configured so as to consecutively generate the obstacle map **40** as shown in FIG. **10A** based on sensor data that is acquired by the LiDAR sensor(s) **140** through one cycle of scanning. For each cycle of scanning, the obstacle map **40** may be updated. The obstacle map **40** may include not only two-dimensional positional information as illustrated, but also information of height from the ground surface or the horizontal plane. The controller **180** may extract only the points whose height is within a predetermined range to generate the obstacle map **40** indicating the distribution of rows of trees. The controller **180** may merge the sensor data that is output from a plurality of LiDAR sensors **140** to generate one obstacle map **40.** For example, the sensor data that is output from two LiDAR sensors **140** (see FIG. **1**) that are disposed in the front and the rear of the work vehicle **100** may be merged to generate one obstacle map **40.** Alternatively, sensor data equivalent to a plurality of cycles may be merged to generate one obstacle map. In the example of FIG. **10A****,** the length **Lh** and the width **Lw** of the obstacle map **40** are equal. However, the length **Lh** and the width **Lw** may be different. For instance, as in the example shown in FIG. **10B****,** the length **Lh** of the obstacle map **40** may be longer than its width **Lw.**

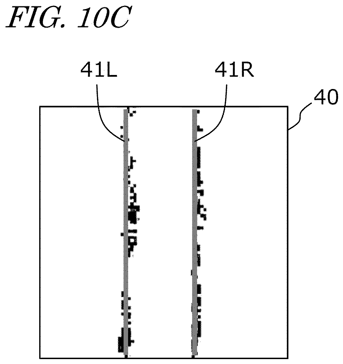

Based on the obstacle map **40,** the controller **180** detects two rows of trees **20R** and **20L** existing on opposite sides of the work vehicle **100.** For example, as shown in FIG. **10C****,** the controller **180** can detect two rows of trees **20R** and **20L** by determining two approximate straight lines **41R** and **41L** (or approximate curves) from a plurality of rows of points that are distributed along the traveling direction of the work vehicle **100.**

FIG. **9** is again referred to. During travel in the inter-row travel mode, based on the sensor data, upon detecting an end of at least the row of trees corresponding to the turning direction between the two rows of trees **20R** and **20L,** the controller **180** performs a process for transitioning to the turning travel mode. In a case where the turning direction is right, for example, after detecting an end of the right row of trees **20R,** the controller **180** performs a process for transitioning to the turning travel mode. Specifically, upon detecting an end of the row of trees **20R** corresponding to the turning direction, the controller **180** sets a coordinate system for turning travel (turning coordinate system) and a target point for the turning travel. A target point for turning travel is an end point of the turning travel, which may be the start point of a next instance of inter-row travel, for example. Based on the interval between rows of trees **20R** and **20L** and the position of the end of the row of trees **20R** in the turning direction, the controller **180** determines the position coordinates of the target point in the turning coordinate system. After setting the turning coordinate system and the target point, based on the turning coordinate system, the controller **180** causes the work vehicle **100** to turn toward the target point.

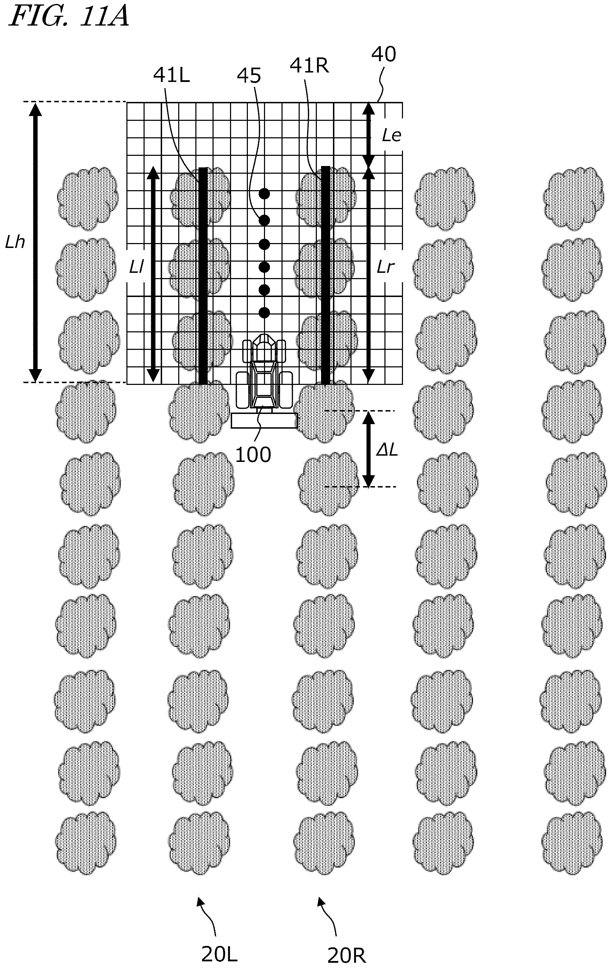

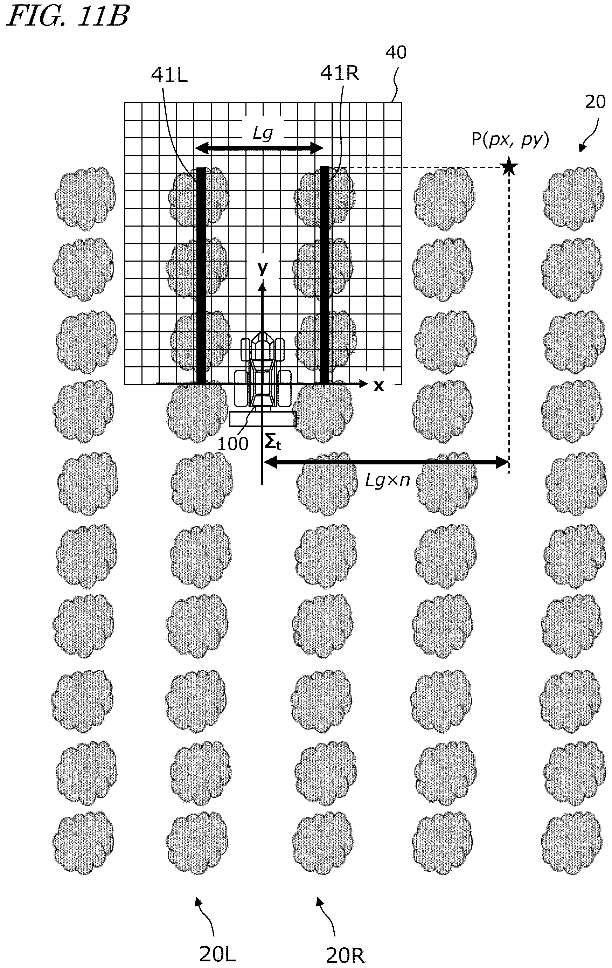

FIG. **11A** and FIG. **11B** are diagrams for describing examples of a method of setting the turning coordinate system and the target point. In the example shown in FIG. **11A****,** the work vehicle **100** travels through a passage between rows of trees **20R** and **20L,** and then turns right to head toward a passage between next rows of trees. During travel, based on the obstacle map **40,** the controller **180** estimates a length **Lr** of at least the row of trees **20R** corresponding to the turning direction in the obstacle map **40,** between the two rows of trees **20R** and **20L.** The controller **180** can estimate the lengths **Lr** and **L1** of the rows of trees **20R** and **20L** in the obstacle map **40** to be the lengths of the approximate straight lines **41R** and **41L** of the rows of trees **20R** and **20L.** Based on a difference **Le** between the length **Lh** of the obstacle map **40** and the length **Lr** of the row of trees **20R** in the turning direction in the obstacle map **40,** the controller **180** detects the end of the row of trees **20R.** For example, when the difference **Le** between the length **Lh** of the obstacle map **40** and the length **Lr** of the row of trees **20R** in the obstacle map **40** has exceeded a threshold, the controller **180** can determine that the end of the row of trees **20R** has been detected. In other words, as soon as the length **Le** of the region in which no objects exist ahead of the row of trees **20R** has exceeded the threshold in the consecutively-generated obstacle map **40,** it is determined that the end of the row of trees **20R** has been detected. The threshold may be set to a value that is greater than the interval **ΔL** between two adjacent trees in each row of trees **20,** for example. The interval **ΔL** is pre-designated, and its information is recorded in the storage **170.**

After detecting the end of the row of trees **20R** in the turning direction, the controller **180** sets the turning coordinate system. First, the controller **180** sets an origin of the turning coordinate system based on the position of the work vehicle **100** at the time of detecting the end of the row of trees **20R** in the turning direction. For example, the controller **180** may set the position of the work vehicle **100** at the time of detecting the end of the row of trees **20R** as an origin of the turning coordinate system. Alternatively, a position that is shifted in a predetermined direction and by a predetermined distance from the position of the work vehicle **100** at the time of detecting the end of the row of trees **20R** may be set as the origin of the turning coordinate system.

FIG. **11B** illustrates an example of a turning coordinate system **Σt** whose origin is the position of the work vehicle **100** at the time of detecting the end of the row of trees **20R.** The turning coordinate system **Σt** in this example is defined by a y axis extending in the traveling direction of the work vehicle **100** from the origin and an x axis extending in a direction that is parallel to the horizontal plane and perpendicular to the y axis. Once setting the turning coordinate system **Σt,** based on the obstacle map **40,** the controller **180** estimates an interval (i.e., the interval between the two approximate straight lines **41R** and **41L) Lg** between the two rows of trees **20R** and **20L,** and sets an integer multiple (except for 0) of the interval **Lg** as an x coordinate value px of the target point **P.** In other words, by performing the computation px=Lg×n for n as a non-zero integer, the x coordinate value px of the target point P is determined. Note that the interval **Lg** between rows of trees may be a pre-designated fixed value. In the example of FIG. **11B****,** n=2, and px=2Lg. When n=1, the work vehicle **100** turns toward a passage between the next rows of trees. When n=2, the work vehicle **100** turns toward a passage between the second next rows of trees. The integer n can be set based on minimum turning radius of the work vehicle **100** and the interval **Lg** between rows of trees, for example. If two times the minimum turning radius (diameter) is equal to or less than the interval **Lg** between rows of trees, n may be set to an integer or 1 or greater. If two times the minimum turning radius is greater than Lg but equal to or less than 2Lg, n may be set to an integer of 2 or greater. Thus, given the k as an integer that is 1 or greater, if two times the minimum turning radius is greater than Lg×(k-1) and is equal to or less than Lg×k, n may be set to an integer of k or greater. n may be set to an integer of 3 or greater. Note that when the work vehicle **100** turns left, n may be set to a negative integer. The factor n may be pre-designated by the user, for example.

In the example of FIG. **11B****,** based on the y coordinate value of the end of the row of trees **20R** in the turning coordinate system **Σt,** the controller **180** sets the y coordinate value of the target point **P.** For example, the controller **180** may set the y coordinate value of the end of the row of trees **20R** in the turning coordinate system **Σt** as the y coordinate value py of the target point **P.** Alternatively, a value obtained by adding a predetermined amount to or subtracting a predetermined amount from the y coordinate value of the end of the row of trees **20R** may be set as the y coordinate value py of the target point **P.**

Thus, based on the obstacle map **40,** the controller **180** according to the present embodiment sets the turning coordinate system **Σt,** calculates the lengths **Lr** and **L1** of the rows of trees **20R** and **20L** as well as the interval **Lg** between rows of trees, and based on these values, determines the target point, which is an entrance of the passage between the rows of trees to be next traveled through.

After setting the turning coordinate system **Σt** and the target point P of turn in the inter-row travel mode, the controller **180** switches to the turning travel mode. After setting the coordinate system **Σt** and the target point **P,** the controller **180** determines whether turning is possible or not, based on the sensor data that is output from the LiDAR sensor(s) **140.** If determining that turning is possible, the controller **180** switches to the turning travel mode. For example, after setting the coordinate system **Σt** and the target point **P** in the inter-row travel mode, upon determining based on the sensor data that a space needed for turning exists and the work vehicle **100** (if the implement **300** is attached, including also the implement **300)** has passed the end of the row of trees **20R** in the turning direction, the controller **180** switches to the turning travel mode.

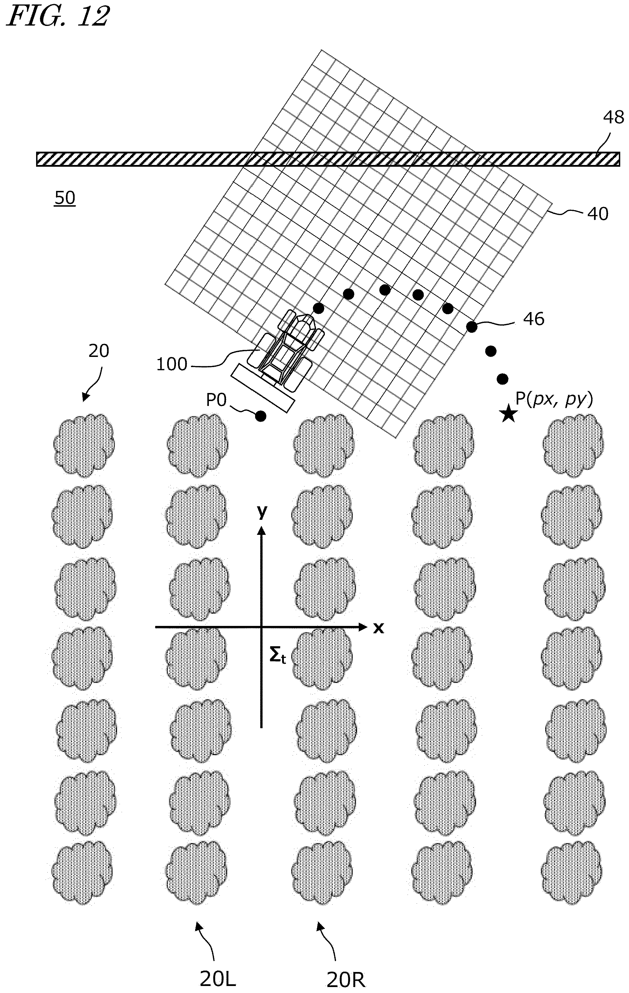

FIG. **12** is a diagram for describing an operation of the work vehicle **100** in the turning travel mode. In the turning travel mode, the controller **180** sets a turning path **46** on the turning coordinate system **Σt,** and causes the work vehicle **100** to travel along the turning path **46** while performing localization on the coordinate system **Σt** based on the sensor data being consecutively output from the LiDAR sensor (s) **140.** For example, the controller **180** sets as the turning path **46** an arc-shaped path that connects a point **P0** at which the work vehicle **100** goes past the end of the row of trees **20R** in the turning direction and the target point P of turn. The turning path **46** may be defined by a plurality of waypoints. Each waypoint main include information of a position and an orientation.

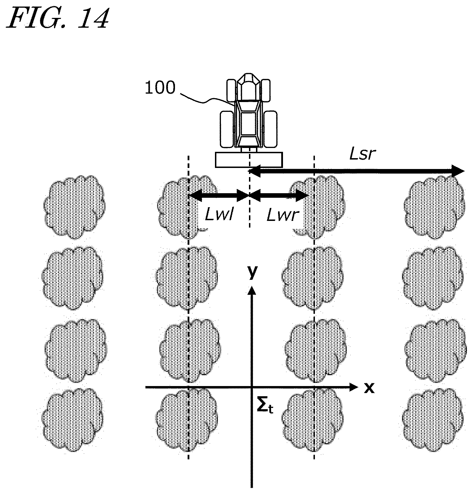

In the example of FIG. **14****,** the space of a headland **50** between the end of each row of trees and the boundary **48** of the orchard is sufficiently broad to allow for turning. In such a case, while performing localization for the work vehicle **100** based on the sensor data, the controller **180** causes the work vehicle **100** to travel along the turning path **46.** The localization may employ an algorithm such as SLAM. The controller **180** may generate an environment map with a relatively broad range by joining together consecutively generated obstacle maps **40,** and perform matching against the environment map and the sensor data, thus achieving localization (i.e., estimation of position and orientation) for the work vehicle **100.** The matching may be carried out by using any arbitrary matching algorithm such as NDT (Normal Distribution Transform) or ICP (Iterative Closest Point), for example. The controller **180** performs control so as to reduce the deviation between the position and orientation of the work vehicle **100** and the position and orientation of each waypoint in the turning path **46.** As a result of this, the work vehicle **100** turns toward the target point **P** along the turning path **46.** On the other hand, if there is no sufficient space for turning in the headland **50,** the controller **180** may halt the work vehicle **100,** or send an alert to the terminal device **400** for monitoring purposes.

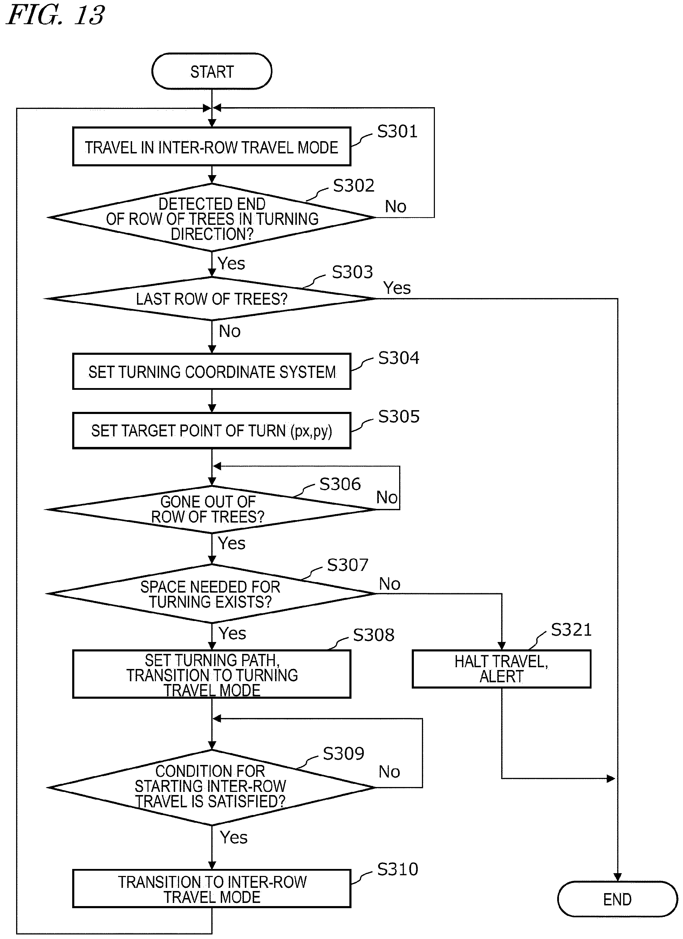

Next, with reference to FIG. **13****,** a more specific example of the method of travel control for the work vehicle **100** will be described.

FIG. **13** is a flowchart showing a more specific example of a method of travel control by the controller **180.** By carrying out the operation from steps **S301 to S321** shown in FIG. **13****,** the controller **180** can cause the work vehicle **100** to perform self-traveling between rows of trees. Hereinafter, the operation of each step will be described.

In an initial state, it is assumed that the work vehicle **100** is located at the entrance of a passage between the first rows of trees, as shown in FIG. **7A** or FIG. **7B****.** Upon receiving command to start self-traveling, the controller **180** begins the operation of step **S301.**

At step **S301,** the controller **180** causes the work vehicle **100** to travel in the inter-row travel mode. In the inter-row travel mode, the controller **180** performs the following operation. First, based on the sensor data that is output from the LiDAR sensor(s) **140,** the controller **180** generates the obstacle map **40.** Next, from the obstacle map **40,** approximate straight lines of two adjacent rows of trees that are located on opposite sides of the work vehicle **100** are calculated. The approximate straight lines can be calculated by performing a Hough transform for the obstacle map **40** in order to extract two line segments extending in directions close to the traveling direction in the vicinity of the work vehicle **100,** for example. The controller **180** may be configured to set a target path by setting a plurality of waypoints at positions that are equidistant from the two approximate straight lines. In a case where the positions to be worked on by the implement **300** attached to the work vehicle **100** are located closer to either one of the right or left, a target path may be set at a position that is shifted from a position that is equidistant from the two approximate straight lines. In a case where the position and orientation of the work vehicle **100** are deviated from the position and direction of the target path, the controller **180** performs steering control so as to reduce the deviation. This allows the work vehicle **100** to travel along a target path that is between the rows of trees. If during travel an obstacle is detected on or near the target path, the controller **180** may halt the work vehicle **100,** or change the target path in the middle so as to avoid the obstacle. At this time, the controller **180** may send an alert to the terminal device **400** for monitoring purposes.

At step **S302,** based on the obstacle map **40,** the controller **180** performs a process of detecting an end of a row of trees. First, the controller **180** determines the lengths **Lr** and **L1** (see FIG. **11A****)** of the two approximate straight lines as extracted by performing a Hough transform for the obstacle map **40.** Next, the controller **180** determines whether a difference **Le** between the length **Lh** of the obstacle map **40** and the length **Lr** or **L1** of the approximate straight line corresponding to the turning direction between the two approximate straight lines exceeds a pre-designated threshold or not. If the difference **Le** exceeds the threshold, it is determined that the end of a row of trees has been detected. Until the end of a row of trees is detected, the operation of steps **S301** and **S302** is repeated. Once the end of the row of trees is detected, control proceeds to step **S303.**

At step **S303,** the controller **180** determines whether the row of trees whose end has been detected is the last row of trees or not. The determination as to whether the row of trees is the last row of trees or not can be made based on information concerning the distribution of the row of trees or the number of rows that is stored in the storage **170** in advance. If the row of trees whose end has been detected is the last row of trees, the controller **180** ends the tasked travel of the work vehicle **100.** If the row of trees whose end has been detected is not the last row of trees, control proceeds to step **S304.**

At step **S304,** the controller **180** sets the turning coordinate system **Σt.** As has been described with reference to FIG. **11B****,** as the turning coordinate system **Σt,** a coordinate system may be set which is defined by an x axis that is perpendicular to the traveling direction of the work vehicle **100** and a y axis that is parallel to traveling direction, from an origin at the position of the work vehicle **100** at the time of detecting the end of the row of trees in the turning direction.

At step **S305,** the controller **180** sets coordinates (px,py) of the target point **P** of turn in the turning coordinate system **Σt.** As shown in FIG. **11B****,** the x coordinate value px of the target point P can be set to a value obtained by multiplying the interval **Lg** between rows of trees with the integer n. The y coordinate value py of the target point **P** can be set to the y coordinate value of the end of the row of trees in the turning direction or a greater value.

At step **S306,** the controller **180** determines whether the work vehicle **100** has gone out of the row of trees in the turning direction. With reference to FIG. **14****,** an example of this determination process will be described. FIG. **14** shows an example situation where the work vehicle **100** has gone out of the row of trees. Based on the sensor data (or the obstacle map), the controller **180** determines a distance **Lsr** from the rear end of the work vehicle **100** (or if the implement **300** is attached, the rear end of the implement **300)** to an object that exists immediately adjacent in the turning direction (i.e., right in the example shown). The controller **180** can determine that the work vehicle **100** has gone out of the row of trees in the turning direction if a difference (Lsr-Lwr) between **Lsr** and the distance **Lwr** to the row of trees in the turning direction has remained above a threshold across a predetermined distance or longer. Alternatively, if the y coordinate value of the rear end of the work vehicle **100** has become greater than the y coordinate value of the leading end of the row of trees in the turning direction, the controller **180** may determine that the work vehicle **100** has gone out of the row of trees in the turning direction. Until going out of the row of trees in the turning direction, the work vehicle **100** continues to travel between rows of trees, while the determination of step **S306** is repeated. Once it is determined that the work vehicle **100** has gone out of the row of trees in the turning direction, control proceeds to step **S307.**

At step **S307,** the controller **180** determines whether a space needed for the turning exists or not. This determination may be made based on the obstacle map **40.** As shown in FIG. **12****,** if the headland **50** between the boundary **48** of the field and the row of trees is wide enough so that turning is possible, and there is no obstacle that obstructs turning, it is determined that a space needed for the turning exists. The position (e.g., latitude and longitude) of the boundary **48** of the field may be set by the user in advance, for example, and recorded in the storage **170.** The controller **180** determines a region needed for turning based on the position of the target point **P,** the position of the start point of turn **P0,** and the sizes of the work vehicle **100** and the implement **300,** for example. If the region does not extend beyond the boundary **48** and no obstacle is detected in the region, the controller **180** can determine that a space needed for the turning exists. If a space needed for the turning does not exist, control proceeds to step **S321,** and the controller **180** halts the work vehicle **100.** At this point, an alert signal may be transmitted to an external device, such as the terminal device **400** for monitoring purposes. If a space needed for the turning exists, control proceeds to step **S308.**

At step **S308,** the controller **180** sets the turning path **46,** and transitions from the inter-row travel mode to the turning travel mode. The turning path **46** may be an arc-shaped path connecting the point **P0** and the point **P** as shown in FIG. **12****,** or may be a path having any other trajectory. The controller **180** performs steering control for the work vehicle **100** so that the work vehicle **100** travels along the turning path **46.** For example, based on the sensor data and the already generated obstacle map, the controller **180** may control turning while estimating the position and orientation of the work vehicle **100** in the turning coordinate system **Σt.** For the estimation of the position and orientation of the work vehicle **100,** a signal that is output from the GNSS receiver **111** and/or a signal that is output from the IMU **115** may be utilized. Since it is possible that a person or another vehicle or the like may pass in the headland **50,** in order to avoid contact, the controller **180** may keep the traveling speed of the work vehicle **100** during turning lower than the traveling speed during inter-row travel. If an obstacle is detected during turning, the controller **180** may halt the work vehicle **100,** or change the turning path **46** in the middle so as to avoid the obstacle. In the turning travel mode, based on the sensor data being consecutively output from the LiDAR sensor(s) **140,** the controller **180** performs a process of detecting two adjacent rows of trees existing near the target point. Upon detecting the two rows of trees, the controller **180** sets a target path in a next instance of inter-row travel (which may hereinafter be referred to as a "next target path") in between the two rows of trees. For example, the controller **180** sets a next target path at a midpoint between the two detect rows of trees, or at a position that is shifted by a predetermined distance from the midpoint. Based on the sensor data, the controller **180** calculates an amount of positional deviation and an amount of directional deviation of the work vehicle **100** with respect to the next target path. For example, from a difference between the position and direction of the work vehicle **100** as obtained through localization based on the sensor data and the position and direction of the target path, the controller **180** can calculate the amount of positional deviation and the amount of directional deviation.

At step **S309,** the controller **180** determines whether the condition for starting inter-row travel is satisfied or not. For example, the controller **180** determines whether a plurality of conditions that have been set as conditions for starting inter-row travel are satisfied or not. The plurality of conditions at least include a first condition and a second condition as follows.
- first condition: the amount of positional deviation is smaller than a first threshold with respect to the next target path
- second condition: the amount of directional deviation is smaller than a second threshold with respect to the next target path

In other words, when the amount of positional deviation and the amount of directional deviation with respect to the next target path are sufficiently small, it may be determined that condition for starting inter-row travel is satisfied.

Furthermore, the controller **180** may calculate a curvature of the target path in a next instance of the inter-row travel mode, and determine that the condition for starting inter-row travel is satisfied when the curvature is smaller than a threshold. In other words, the aforementioned plurality of conditions may include a third condition as follows.
- third condition: the curvature of the next target path is smaller than a third threshold

In this case, when a curvature of the target path in a next instance of the inter-row travel mode is sufficiently small, in addition to the aforementioned first condition and second condition being met, it is determined that the condition for starting inter-row travel is satisfied.

Moreover, when the work vehicle **100** has the implement **300** linked thereto, the controller **180** may calculate a distance between the two crop rows in a next instance of the inter-row travel mode that are detected based on the sensor data, and determine that the condition for starting inter-row travel is satisfied when the distance is larger than the width of the implement **300.** In other words, the aforementioned plurality of conditions may include a fourth condition as follows.
- fourth condition: the width of the implement **300** is smaller than an interval between the two crop rows in a next instance of the inter-row travel mode

In this case, only when the width of the implement **300** is smaller than the interval between the two crop rows in addition to the aforementioned conditions being met, it is determined that the condition for starting inter-row travel is satisfied.

If the condition for starting inter-row travel is not satisfied, the controller **180** continues its control in the turning travel mode. If the condition for starting inter-row travel is satisfied, control proceeds to step **S310,** and the controller **180** transitions to the inter-row travel mode. Thereafter, control returns to step **S301,** and a similar operation is repeated.

Now, a more specific example of the operation from steps **S308** to **S310,** i.e., from transitioning into the turning travel mode to again transitioning into the inter-row travel mode, will be described.

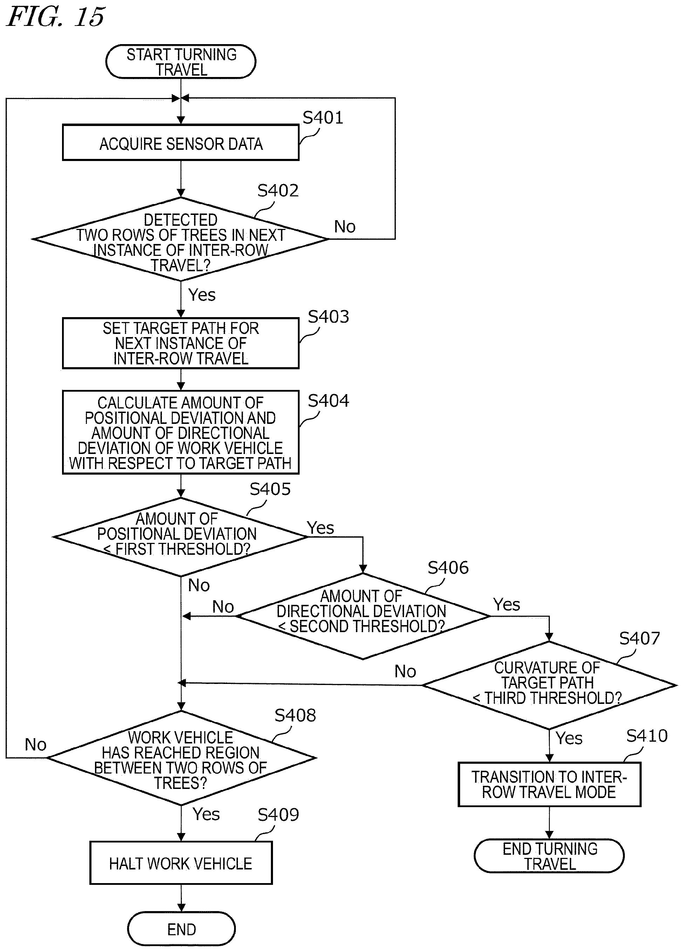

FIG. **15** is a flowchart showing an example of a control method for the work vehicle **100** in the turning travel mode. In this example, in the turning travel mode, while causing the work vehicle **100** to travel along a turning path, the controller **180** performs an operation from steps **S401** to **S410** shown in FIG. **15****.** Hereinafter, the operation of each step will be described.

At step **S401,** the controller **180** acquires sensor data that is output from the LiDAR sensor(s) **140.**

At step **S402,** based on the sensor data, the controller **180** performs a process of detecting two rows of trees in a next instance of inter-row travel. For example, the controller **180** generates the aforementioned obstacle map based on the sensor data, and detects two rows of trees in the next instance of inter-row travel based on the obstacle map. If the two rows of trees are detected, control proceeds to step **S403.** If the two rows of trees are not detected, control returns to step **S401.**

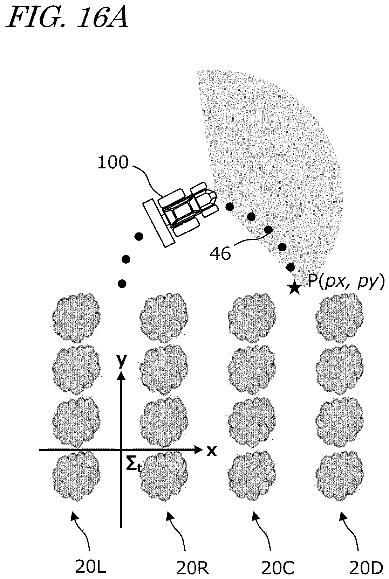

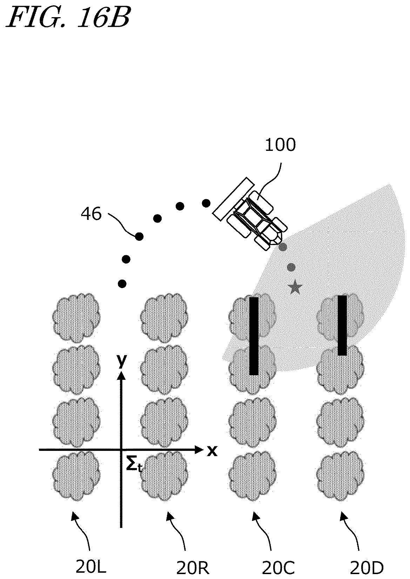

FIG. **16A** and FIG. **16B** are diagrams for describing a process of detecting two rows of trees **20C** and **20D** in a next instance of inter-row travel. FIG. **16A** shows an example situation where the two rows of trees **20C** and **20D** in a next instance of inter-row travel are not detected. FIG. **16B** shows an example situation where the two rows of trees **20C** and **20D** in a next instance of inter-row travel are detected. In FIG. **16A** and FIG. **16B****,** a range of sensing by the LiDAR sensor(s) **140** is exemplified by a fan shape. In the example shown in FIG. **16A****,** the work vehicle **100** is not facing in the direction of the two rows of trees **20C** and **20D** in the next instance of inter-row travel, so that the two rows of trees **20C** and **20D** are outside the sensing range. Therefore, the rows of trees **20C** and **20D** will not be detected from the sensor data. In such a case, the controller **180** continues travel along the turning path **46** until the two rows of trees **20C** and **20D** are detected. Eventually, as shown in FIG. **16B****,** the work vehicle **100** will face in the direction of the rows of trees **20C** and **20D,** so that the rows of trees **20C** and **20D** can now be detected from the sensor data. The thick lines in FIG. **16B** exemplify approximate curves (which in this example are line segments) for the rows of trees **20C** and **20D** detected from the sensor data. The controller **180** may be configured to determine that the two rows of trees **20C** and **20D** have been detected when such approximate curves are successfully generated from an obstacle map based on the sensor data.

When the two rows of trees **20C** and **20D** are detected at step **S402** shown in FIG. **15****,** control proceeds to step **S403,** and the controller **180** sets a target path for the next instance of inter-row travel. The target path for the next instance of inter-row travel is set in between (e.g., at a midpoint between) the approximate curves of the rows of trees **20C** and **20D.**

At step **S404,** the controller **180** calculates an amount of positional deviation and an amount of directional deviation of the work vehicle **100** with respect to the target path. The controller **180** can estimate the position and direction (orientation) of the work vehicle **100** through a matching between the sensor data and the environment map. Based on a comparison between the estimated position and direction of the work vehicle **100** and the position and direction of the target path, the controller **180** can calculate the amount of positional deviation and the amount of directional deviation.

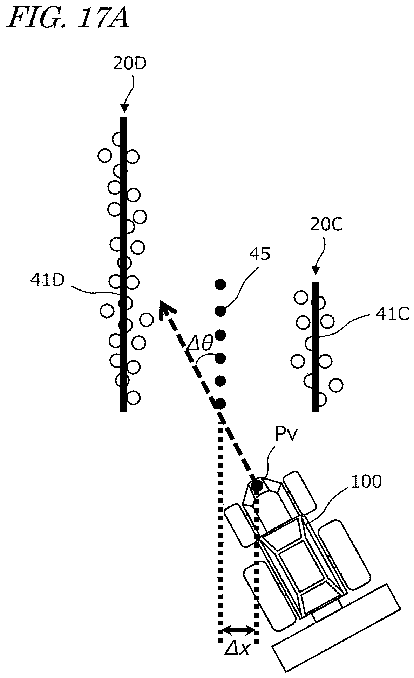

FIG. **17A** is a diagram for describing an amount of positional deviation and an amount of directional deviation of the work vehicle **100** with respect to the target path **45.** In the example of FIG. **17A****,** among the reflection points detected by the LiDAR sensor(s) **140** mounted on the work vehicle **100,** those reflection points which correspond to the rows of trees **20C** and **20D** are exemplified by blank circles. The target path **45** may be set in between (e.g., at a midpoint between) the two approximate curves **41C** and **41D** (which in this example are line segments) as determined based on the positions of the reflection points corresponding to the two rows of trees **20C** and **20D.** For example, as an amount of positional deviation of the work vehicle **100** with respect to the target path **45,** the controller **180** may calculate a distance Δx between the position **Pv** of the work vehicle **100** and the target path **45** (or a line which is an imaginary extension of the target path **45).** Moreover, as an amount of directional deviation of the work vehicle **100** with respect to the target path **45,** the controller **180** may calculate an angle Δθ between the direction in which the target path **45** extends and the traveling direction of the work vehicle **100.** Although the position of the front end portion of the work vehicle **100** is treated as the position **Pv** of the work vehicle **100** in the example of FIG. **17A****,** the position of any other site on the work vehicle **100** may be treated as the position of the work vehicle **100.**

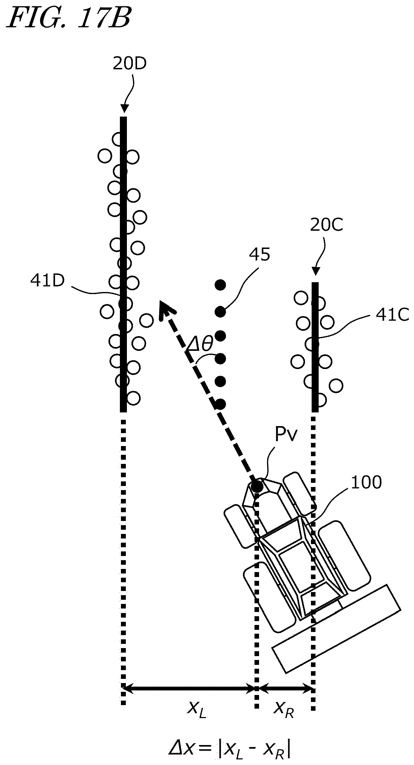

FIG. **17B** is a diagram for describing another calculation method for an amount of positional deviation of the work vehicle **100** with respect to the target path **45.** When the target path **45** is set at a midpoint between the approximate curves **41C** and **41D** of the rows of trees **20C** and **20D,** as shown in FIG. **17B****,** as an amount of positional deviation Δx, the controller **180** may calculate a difference between a first distance X_{R} and a second distance X_{L}, which are respective distances between the position **Pv** of the work vehicle **100** and two straight lines which are imaginary extensions of the two rows of trees **20C** and **20D** in a next instance of the inter-row travel mode.

When an amount of positional deviation and an amount of directional deviation are calculated at step **S404** shown in FIG. **15****,** control proceeds to step **S405.** At step **S405,** the controller **180** determines whether the amount of positional deviation is smaller than a first threshold or not. The first threshold may be set to an appropriate value which is in accordance with the width of the work vehicle **100,** the width of the implement **300,** the interval between rows of trees, or the like, for example. The first threshold may be set to a value of, e.g., several centimeters to several ten centimeters. If the amount of positional deviation is smaller than the first threshold, control proceeds to step **S406.** If the amount of positional deviation is equal to or greater than the first threshold, control proceeds to step **S408.**

At step **S406,** the controller **180** determines whether the amount of directional deviation is smaller than a second threshold or not. The second threshold may also be set to an appropriate value which is in accordance with the width of the work vehicle **100,** the width of the implement **300,** the interval between rows of trees, or the like, for example. The second threshold may be set to a value of, e.g., 5 degrees to 20 degrees. If the amount of directional deviation is smaller than the second threshold, control proceeds to step **S407.** If the amount of directional deviation is equal to or greater than the second threshold, control proceeds to step **S408.**

At step **S407,** the controller **180** calculates a curvature of the target path in a next instance of the inter-row travel mode, and determines whether the curvature is smaller than a third threshold or not. The third threshold may be set to an appropriate value which is in accordance with the width of the work vehicle **100,** the width of the implement **300,** the interval between rows of trees, the length of the work vehicle **100,** the turning performance of the work vehicle **100,** or the like, for example. If the curvature is smaller than the third threshold, control proceeds to step **S410.** If the curvature is equal to or greater than the third threshold, control proceeds to step **S408.**

At step **S408,** the controller **180** determines whether the work vehicle **100** has reached a region between the two rows of trees in a next instance of the inter-row travel mode or not. On the basis of the relative positioning between the position of the work vehicle **100** as estimated based on the sensor data and the two detected rows of trees, the controller **180** can determine whether the work vehicle **100** has reached a region between the two rows of trees or not. If the work vehicle **100** has not reached a region between the two rows of trees, control returns to step **S401,** and the aforementioned operation is again performed. If the work vehicle **100** has reached a region between the two rows of trees, control proceeds to step **S409.**

At step **S409,** the controller **180** stops the turning travel mode, and halts the work vehicle **100.** This is because, if the amount of positional deviation or the amount of directional deviation of the work vehicle **100** with respect to the target path is large, or if the curvature of the target path is large, performing inter-row travel may result in a contact between the work vehicle **100** and a tree. Note that, if it is determined at step **S407** that the curvature of the target path is smaller than the third threshold, control may immediately proceed to step **S409** to halt the work vehicle **100,** without going through step **S408.** The reason is that: regarding the amount of positional deviation and the amount of directional deviation, these deviations can be reduced as the work vehicle **100** approaches the two rows of trees. However, it is often the case that the curvature of the target path does not decrease even if the work vehicle **100** approaches the two rows of trees.

At step **S410,** the controller **180** transitions to the inter-row travel mode. The controller **180** ends its control of turning travel using the aforementioned turning coordinate system, and restarts a control of inter-row travel as described with reference to FIG. **9****.**

Note that the order of steps **S405, S406** and **S407** may be swapped, without being limited to the order shown in the figure.

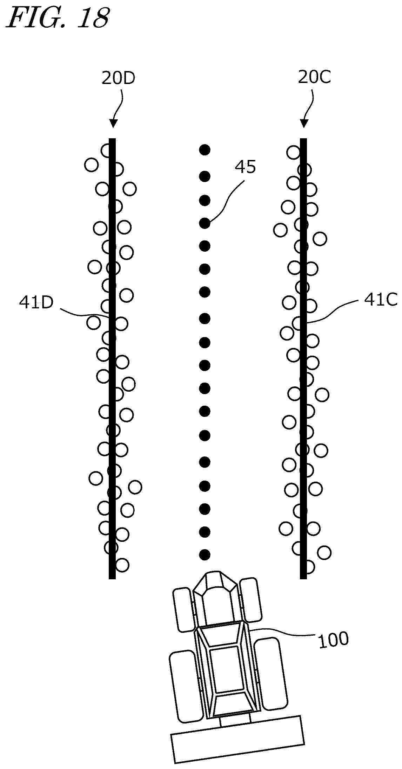

FIG. **18** is a diagram showing an example situation where the amount of positional deviation and the amount of directional deviation of the work vehicle **100** with respect to the target path **45** are smaller than their respective thresholds. When the amount of positional deviation is smaller than the first threshold, the work vehicle **100** is located at a point that is close to the target path **45.** Moreover, when the amount of directional deviation is smaller than the second threshold, the traveling direction of the work vehicle **100** and the target path **45** are of a near-parallel relationship. In the present embodiment, when in such a state, the controller **180** switches from the turning travel mode to the inter-row travel mode.

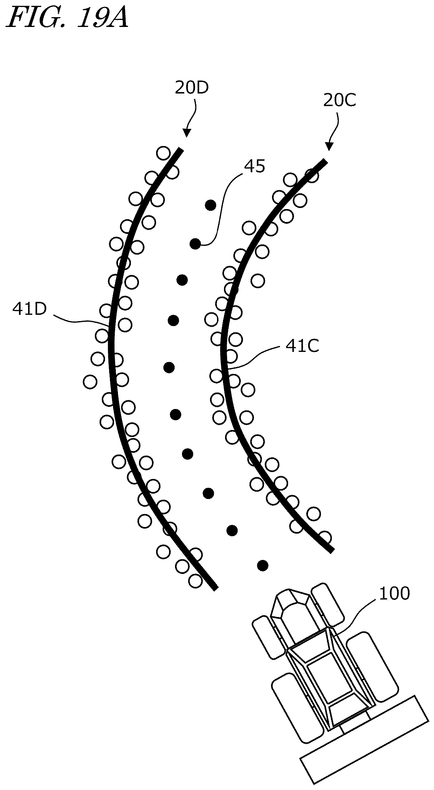

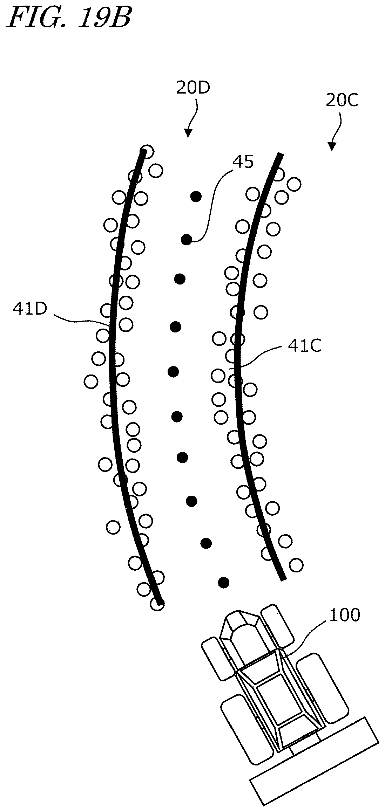

Furthermore, in the present embodiment, it is only when the curvature of the target path is determined to be smaller than the third threshold at step **S407** that the controller **180** switches from the turning travel mode to the inter-row travel mode. FIG. **19A** is a diagram showing an example in which the curvature of the target path **45** is equal to or greater than the third threshold. FIG. **19B** is a diagram showing an example in which the curvature of the target path **45** is smaller than the third threshold. In the examples of FIG. **19A** and FIG. **19B****,** the trees in the rows of trees **20C** and **20D** are in a curved arrangement. The controller **180** sets the target path **45** in between (e.g., at a midpoint between) the approximate curves **41C** and **41D** of the rows of trees **20C** and **20D** as calculated based on the obstacle map. Based on the coordinates of a plurality of waypoints (dark circles in the figure) forming the target path **45,** the controller **180** can derive a approximate circle for the target path **45,** and calculate a curvature or a curvature radius of the target path **45** from the radius of that circle. The controller **180** switches from the turning travel mode to the inter-row travel mode when, as in the example of FIG. **19B****,** the curvature of the target path **45** is sufficiently small (i.e., the curvature radius is sufficiently large). Through such control, it becomes possible to appropriately switch from turning travel to inter-row travel.

Note that the determination of step **S407** may be omitted if it is previously known that the curvature of the target path is sufficiently small, as in a case where each row of trees consists of a plurality of trees that are in a linear arrangement. In other words, without calculating a curvature of the target path, the controller **180** may switch from the turning travel mode to the inter-row travel mode when the two conditions are satisfied, i.e., the first condition that the amount of positional deviation is smaller than the first threshold and the second condition that the amount of directional deviation is smaller than the second threshold.

The controller **180** may switch from the turning travel mode to the inter-row travel mode when, in addition to the aforementioned first condition and second condition being met, the fourth condition that the width of the implement **300** is smaller than an interval between the two crop rows in a next instance of the inter-row travel mode is satisfied. By imposing the fourth condition, it becomes possible to reduce the possibility that the implement **300** may come in contact with the crops. Furthermore, the controller **180** may switch from the turning travel mode to the inter-row travel mode when, in addition to the first condition, second condition, and fourth condition being met, the third condition that a curvature of the target path in a next instance of the inter-row travel mode is smaller than the third threshold is satisfied, as in step **S407** of FIG. **15****.** By imposing the third condition, when crop rows are in a curved arrangement, it becomes possible to reduce the possibility that the work vehicle **100** may fail to follow a steep curve and come in contact with the crops.

In the example of FIG. **15****,** the inter-row travel mode is immediately entered as soon as all of steps **S405, S406** and **S407** have been determined as Yes. Without being limited to such an operation, for example, the work vehicle **100** may travel between the two rows of trees for a while before transitioning to the inter-row travel mode.

At step **S409,** instead of halting the work vehicle **100,** the controller **180** may cause the work vehicle **100** to travel backward, and thereafter restart a control of self-traveling of the work vehicle **100** in the turning travel mode. The reason is that, in some cases, causing the work vehicle **100** to travel backward and moving it again closer to the two rows of trees may help the position and orientation of the work vehicle **100** to be adjusted, such that the condition for starting inter-row travel becomes satisfied.

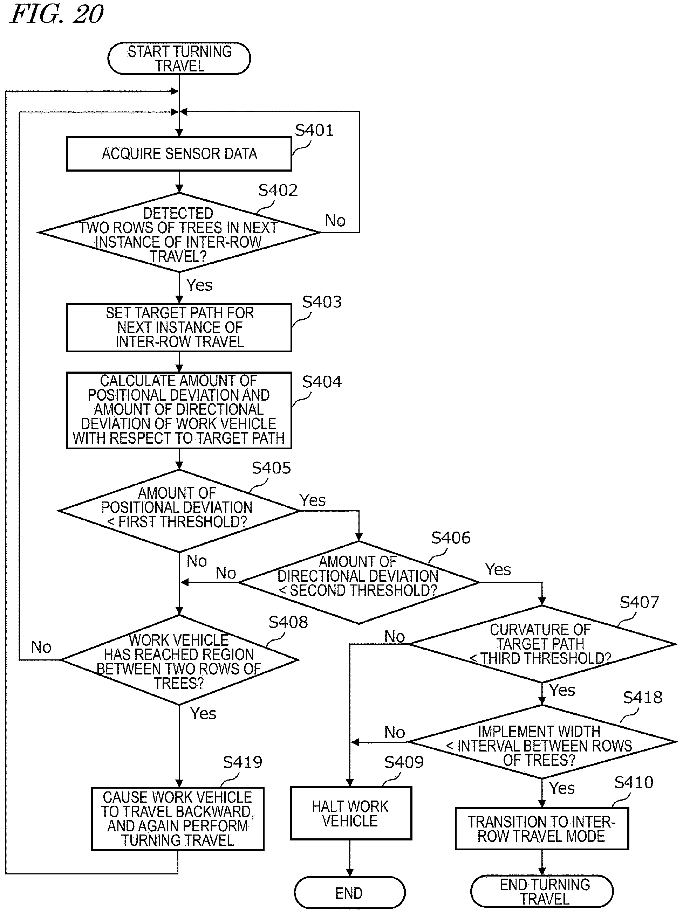

FIG. **20** shows a variation of the flowchart shown in FIG. **15****.** Hereinafter, differences from the flowchart shown in FIG. **15** will be described.

In the example shown in FIG. **20****,** when step **S408** is determined as Yes, control proceeds to step **S419,** and the controller **180** causes the work vehicle **100** to travel backward by a predetermined distance, and again performs turning travel. The direction of backward travel may be a direction along a row of trees, or a direction of following the turning path in the opposite direction, for example. After causing the work vehicle **100** to travel backward by a predetermined distance, the controller **180** causes the work vehicle **100** to travel in the turning travel mode toward a target point of turning travel. After step **S419,** control returns to step **S401,** and the condition for starting inter-row travel is again judged.

In the example shown in FIG. **20****,** after step **S407** is determined as Yes, the controller **180** proceeds to step **S418,** and determines whether the width of the implement **300** is smaller than the interval between rows of trees (i.e., crop rows) in a next instance of inter-row travel or not. If step **S418** is determined as Yes, control proceeds to step **S410,** and transitions to the inter-row travel mode. If step **S407 or S418** is determined as No, control proceeds to step **S409,** and the controller **180** halts the work vehicle **100.**

Thus, in the example shown in FIG. **20****,** when at least one of the first condition (step **S405)** and the second condition (step **S406)** fails to be satisfied and the work vehicle **100** has reached a region between the two crop rows in a next instance of the inter-row travel mode, the controller **180** suspends the turning travel mode, and causes the work vehicle **100** to travel backward (step **S419).** After causing the work vehicle **100** to travel backward, the controller **180** restarts a control of self-traveling of the work vehicle **100** in the turning travel mode. As a result, any positional deviation and directional deviation of the work vehicle **100** with respect to the target path can be reduced, and entry into the travel path between crop rows can be retried.

Moreover, in the example shown in FIG. **20****,** the controller **180** switches from the turning travel mode to the inter-row travel mode when the fourth condition (step **S418)** is satisfied in addition to the first condition (step **S405),** the second condition (step **S406),** and the third condition (step **S407)** being met. When at least one of the third condition and the fourth condition fails to be satisfied, the controller **180** halts the work vehicle **100** (step **S409).** This makes it possible to prevent inter-row travel from being begun when the curvature of the target path is too large or when the interval between crop rows is smaller than the width of the implement.

Through the above operation, the work vehicle **100** can automatically perform travel between rows of trees and turns. According to the present embodiment, when the end of a row of trees is detected, the turning coordinate system and the target point are set, and travel control along the turning path is performed based on a turning coordinate system. Furthermore, upon confirming that any deviation in the position and direction of the work vehicle **100** with respect to the target path in a next instance of inter-row travel is sufficiently small, turning travel is switched to inter-row travel. This makes it possible to smoothly perform a turn for changing the row to be traveled and switching between the turning travel mode and the inter-row travel mode. Even in an environment in which GNSS-based positioning is difficult, e.g., an orchard or a forest, or in an environment where localization based on a matching between the sensor data and a previously generated environment map is difficult, it becomes possible to smoothly perform self-traveling between rows of trees.

In the example shown in FIG. **13****,** when a target point of turn is set at step **S305,** the target point is maintained until the turn is completed. Such an operation is effective in cases where the position of the end of every row of trees is aligned along the y direction, as shown in FIG. **12****.** However, when the position of the end of every row of trees is not aligned along the y direction, it may become necessary to modify the target point after it is set. For example, if any other row of trees exists on or near a turning path toward the target point **P,** the work vehicle **100** or the implement **300** may come in contact with this other row of trees unless the target point **P** is changed. In order to address such situations, after setting the target point **P,** the controller **180** may perform a process of modifying the target point **P** based on the sensor data as necessary.

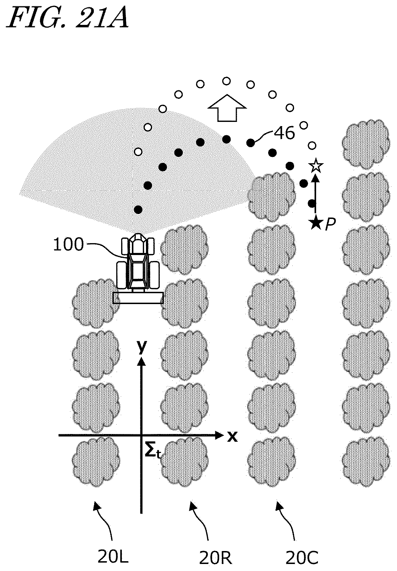

FIG. **21A** is a diagram showing an example of an operation of modifying the target point **P.** In FIG. **21A****,** an example of the sensing range of the LiDAR sensor(s) **140** is schematically depicted by a fan shape. In this example, the more to the right the row of trees is located, the longer region along the y direction the trees span. Therefore, after the target point **P** is set and before the work vehicle **100** has gone past the end of the row of trees **20R,** an end of another row of trees **20C** that is located to the right of the row of trees **20R** is detected. In such a case, the controller **180** modifies the y coordinate value of the target point **P** to a value that is equal to or greater than the y coordinate value of the end of the other row of trees **20C.** With this, the controller **180** modifies the turning path from a path indicated by dark circles in the figure to a path indicated by blank circles. As a result, contact between the work vehicle **100** or the implement **300** and the other row of trees **20C** can be avoided.

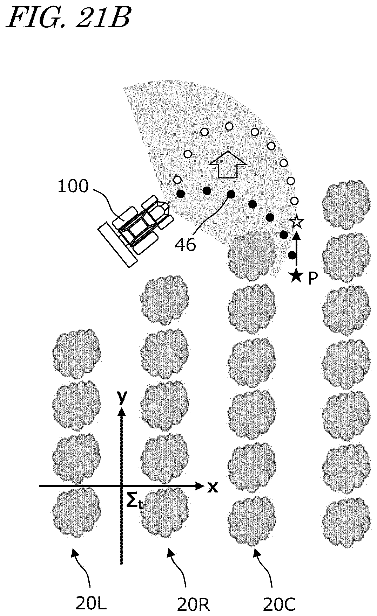

FIG. **21B** is a diagram showing another example of an operation of modifying the target point **P.** In this example, after the target point **P** is set and the work vehicle **100** begins turning beyond the end of the row of trees **20R,** another row of trees **20C** that is located to the right of the row of trees **20R** is detected. In this case, in the middle of the turning, the controller **180** modifies the y coordinate value of the target point **P** to a value that is equal to or greater than the y coordinate value of the end of the other row of trees **20C.** With this, the controller **180** modifies the turning path **46** from a path indicated by dark circles in the figure to a path indicated by blank circles. As a result, contact between the work vehicle **100** or the implement **300** and the other row of trees **20C** can be avoided.

In performing the operations illustrated in FIG. **21A** and FIG. **21B****,** after setting the turning coordinate system **Σt,** the controller **180** may magnify the size of the obstacle map **40.** By magnifying the size of the obstacle map **40,** it becomes easier to detect an obstacle such as the other row of trees **20C.**

Although the above example illustrates that the target point **P** is modified, without modifying the target point **P,** the turning path **46** may be modified to avoid contact with another row of trees. For example, after setting the turning path, if any other row of trees is detected based on the sensor data, the controller **180** may modify the turning path in accordance with a position relationship of the other row of trees and the turning path.

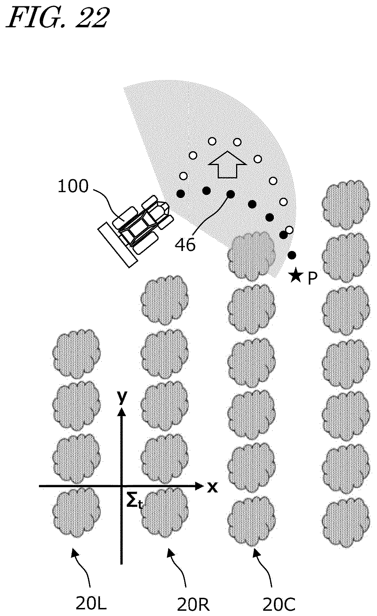

FIG. **22** is a diagram showing an example where the turning path **46** is modified while maintaining the target point **P.** In this example, upon detecting another row of trees **20C** on or near the turning path **46** during a turn based on the sensor data, the controller **180** modifies the turning path **46,** without modifying the target point **P.** Depending on the position relationship between the other row of trees **20C** and the target point **P,** without having to modify the target point **P,** a mere modification of the turning path **46** can prevent contact between the work vehicle **100** and the other row of trees **20C.** In that case, it would be effective to apply the operation shown in FIG. **22****.**

### [3. other embodiments]

In the above embodiment, the one or more exterior sensors included in the work vehicle are a LiDAR sensor(s) to output two-dimensional or three-dimensional point cloud data as sensor data through scanning of a laser beam. However, the exterior sensors are not limited to such LiDAR sensors. For example, other types of sensors such as flash-type LiDAR sensors or image sensors may be used. Such other types of sensors may be used in combination with scan-type LiDAR sensors.

Although in the above embodiment the work vehicle performs self-traveling between rows of trees in an orchard, the work vehicles may be used for the purposes of self-traveling between crop rows other than rows of trees. For example, the techniques according to the present disclosure are applicable to work vehicles, such as tractors, that perform self-traveling among a plurality of crop rows in an agricultural field.

A device that performs a processing needed for self-traveling of a work vehicle according to the above embodiment may be mounted to a work vehicle lacking such functionality as an add-on. For example, a control unit to control the operation of a work vehicle that travels among a plurality of crop rows may be attached to the work vehicle in use.

Thus, the present disclosure encompasses work vehicles and control methods for a work vehicle as recited in the following Items.

### [Item 1]

A work vehicle to perform self-traveling among a plurality of crop rows, the work vehicle comprising:
an exterior sensor to output sensor data indicating a distribution of geographic features around the work vehicle; and
a controller to control self-traveling of the work vehicle, wherein
the controller is configured to:
   control self-traveling of the work vehicle in an inter-row travel mode of causing the work vehicle to travel along a target path between two adjacent crop rows that are detected based on the sensor data, and in a turning travel mode of causing the work vehicle to turn in a headland before and after the inter-row travel mode;
in the turning travel mode, calculate an amount of positional deviation and an amount of directional deviation of the work vehicle with respect to a target path in a next instance of the inter-row travel mode based on the sensor data; and
   switch from the turning travel mode to the inter-row travel mode upon satisfying a plurality of conditions including:
   a first condition that the amount of positional deviation is smaller than a first threshold; and
   a second condition that the amount of directional deviation is smaller than a second threshold.

### [Item 2]

The work vehicle of Item 1, wherein,
in the inter-row travel mode, the controller
detects two crop rows located on opposite side of the work vehicle based on the sensor data being consecutively output from the exterior sensor, and
causes the work vehicle to travel along the target path while setting the target path in between the two detected crop rows.

### [Item 3]

The work vehicle of Item 2, wherein, in the inter-row travel mode, the controller sets the target path at a midpoint between the two detected crop rows.

### [Item 4]

The work vehicle of Item 3, wherein,
in the turning travel mode, the controller
calculates a first distance and a second distance based on the sensor data, the first distance and the second distance being respective distances between a point at which the work vehicle is located and two straight lines which are imaginary extensions of the two crop rows and in a next instance of the inter-row travel mode, and
calculates a difference between the first distance and the second distance as the amount of positional deviation.

### [Item 5]

The work vehicle of Item 2, wherein, in the inter-row travel mode, the controller sets the target path at a position that is offset from a midpoint between the two detected crop rows.

### [Item 6]

The work vehicle of Item 5, wherein, in the inter-row travel mode, the controller sets an amount of offset from the midpoint between the two crop rows based on a content of work to be performed by the work vehicle during travel and/or a type of an implement that is linked to the work vehicle.

### [Item 7]

The work vehicle of any of Items 1 to 6, wherein, in the turning travel mode, while estimating its own position based on the sensor data being consecutively output from the exterior sensor, the controller causes the work vehicle to turn along a turning path that has been set.

### [Item 8]

The work vehicle of any of Items 1 to 7, wherein
in the turning travel mode, the controller
detects the two crop rows in a next instance of the inter-row travel mode based on the sensor data being consecutively output from the exterior sensor, and
suspends the turning travel mode to halt the work vehicle or cause the work vehicle to travel backward when at least one of the first condition and the second condition fails to be satisfied and the work vehicle has reached a region between the two crop rows in the next instance of the inter-row travel mode.

### [Item 9]

The work vehicle of Item 8, wherein, after causing the work vehicle to travel backward, the controller restarts a control of self-traveling of the work vehicle in the turning travel mode.

### [Item 10]

The work vehicle of any of Items 1 to 9, wherein, in the turning travel mode, the controller
detects the two crop rows in a next instance of the inter-row travel mode based on the sensor data being consecutively output from the exterior sensor,
sets the target path in the next instance of the inter-row travel mode in between the two detected crop rows,
calculates a curvature of the target path in the next instance of the inter-row travel mode having been set; and
the plurality of conditions further include
   a third condition that the curvature of the target path in the next instance of the inter-row travel mode is smaller than a third threshold.

### [Item 11]

The work vehicle of Item 10, wherein, in the turning travel mode, the controller halts the work vehicle when the third condition is not satisfied.

### [Item 12]

The work vehicle of any of Items 1 to 11, wherein, when the work vehicle has an implement linked thereto,
in the turning travel mode, the controller
detects the two crop rows in a next instance of the inter-row travel mode based on the sensor data being consecutively output from the exterior sensor, and
calculates a distance between the two detected crop rows in the next instance of the inter-row travel mode; and the plurality of conditions further include
a fourth condition that a width of the implement is smaller than an interval between the two crop rows in the next instance of the inter-row travel mode.

### [Item 13]

The work vehicle of Item 12, wherein, in the turning travel mode, the controller halts the work vehicle when the fourth condition is not satisfied.

### [Item 14]

The work vehicle of any of Items 1 to 13, wherein, in the inter-row travel mode and in the turning travel mode, the controller halts the work vehicle in any of the following cases:
when an obstacle is detected based on the sensor data;
when a fuel of the work vehicle is smaller than a predetermined amount;
when an amount of material possessed by the work vehicle is smaller than a predetermined amount;
when a problem of the work vehicle is detected;
when an instruction to halt is received from a user;
when an angle of tilt of the work vehicle is larger than a predetermined value; and
when work to be performed by the work vehicle is finished.

### [Item 15]

The work vehicle of any of Items 1 to 14, wherein the exterior sensor includes one or more LiDAR sensors to output point cloud data as the sensor data.

### [Item 16]

A control method for a work vehicle to perform self-traveling among a plurality of crop rows, the control method comprising:
controlling self-traveling of the work vehicle in an inter-row travel mode of causing the work vehicle to travel along a target path between two adjacent crop rows that are detected based on sensor data indicating a distribution of geographic features around the work vehicle, and in a turning travel mode of causing the work vehicle to turn in a headland before and after the inter-row travel mode;
in the turning travel mode, calculating an amount of positional deviation and an amount of directional deviation of the work vehicle with respect to a target path in a next instance of the inter-row travel mode based on the sensor data; and
switching from the turning travel mode to the inter-row travel mode upon satisfying a plurality of conditions including:
   a first condition that the amount of positional deviation is smaller than a first threshold; and
   a second condition that the amount of directional deviation is smaller than a second threshold.

### INDUSTRIAL APPLICABILITY

The technique according to the present disclosure is applicable to a work vehicle, e.g., a tractor, that moves in an environment in which a plurality of crop rows (e.g., rows of trees) exist, such as an orchard, an agricultural field, or a mountain forest.

### REFERENCE SIGNS LIST

**20**... row of trees, **30**...target path, **40**...obstacle map, **41R, 41L**...row of trees, **45**...target path, **46**...turning path, **48**...boundary, **50**...headland, **80**...network, **100**...work vehicle, **101**...vehicle body, **102**...prime mover, **103**... transmission, **104**... wheel, **105**...cabin, **106**... steering device, **107**...driver's seat, **108**...linkage device, **110**...GNSS unit, **115**...inertial measurement unit, **116**...processing circuit, **120**...camera, **130**...obstacle sensor, **140**...LiDAR sensor, **141**...laser unit, **142**...laser light source, **143**...photodetector, **144**...motor, **145**...control circuit, **146**...signal processing circuit, **147**...memory, **150**...sensors, **152**...steering wheel sensor, **154**...angle-of-turn sensor, **156**...axle sensor, **160**...control system, **170**...storage, **180**...controller, **181** to **184**...ECU, **190**...communicator, **200**...operation terminal, **210**...operation switches, **240**...drive device, **300**...implement, **340**...drive device, **380**...controller, **390**... communicator, **400**...terminal device

## Claims

1. A work vehicle to perform self-traveling among a plurality of crop rows, the work vehicle comprising:
an exterior sensor to output sensor data indicating a distribution of geographic features around the work vehicle; and
a controller to control self-traveling of the work vehicle, wherein
the controller is configured to:
control self-traveling of the work vehicle in an inter-row travel mode of causing the work vehicle to travel along a target path between two adjacent crop rows that are detected based on the sensor data, and in a turning travel mode of causing the work vehicle to turn in a headland before and after the inter-row travel mode;
in the turning travel mode, calculate an amount of positional deviation and an amount of directional deviation of the work vehicle with respect to a target path in a next instance of the inter-row travel mode based on the sensor data; and
switch from the turning travel mode to the inter-row travel mode upon satisfying a plurality of conditions including:
a first condition that the amount of positional deviation is smaller than a first threshold; and
a second condition that the amount of directional deviation is smaller than a second threshold.

2. The work vehicle of claim 1, wherein,
in the inter-row travel mode, the controller
detects two crop rows located on opposite side of the work vehicle based on the sensor data being consecutively output from the exterior sensor, and
causes the work vehicle to travel along the target path while setting the target path in between the two detected crop rows.

3. The work vehicle of claim 2, wherein, in the inter-row travel mode, the controller sets the target path at a midpoint between the two detected crop rows.

4. The work vehicle of claim 3, wherein,
in the turning travel mode, the controller
calculates a first distance and a second distance based on the sensor data, the first distance and the second distance being respective distances between a point at which the work vehicle is located and two straight lines which are imaginary extensions of the two crop rows and in a next instance of the inter-row travel mode, and
calculates a difference between the first distance and the second distance as the amount of positional deviation.

5. The work vehicle of claim 2, wherein, in the inter-row travel mode, the controller sets the target path at a position that is offset from a midpoint between the two detected crop rows.

6. The work vehicle of claim 5, wherein, in the inter-row travel mode, the controller sets an amount of offset from the midpoint between the two crop rows based on a content of work to be performed by the work vehicle during travel and/or a type of an implement that is linked to the work vehicle.

7. The work vehicle of any of claims 1 to 6, wherein, in the turning travel mode, while estimating its own position based on the sensor data being consecutively output from the exterior sensor, the controller causes the work vehicle to turn along a turning path that has been set.

8. The work vehicle of any of claims 1 to 6, wherein
in the turning travel mode, the controller
detects the two crop rows in a next instance of the inter-row travel mode based on the sensor data being consecutively output from the exterior sensor, and
suspends the turning travel mode to halt the work vehicle or cause the work vehicle to travel backward when at least one of the first condition and the second condition fails to be satisfied and the work vehicle has reached a region between the two crop rows in the next instance of the inter-row travel mode.

9. The work vehicle of claim 8, wherein, after causing the work vehicle to travel backward, the controller restarts a control of self-traveling of the work vehicle in the turning travel mode.

10. The work vehicle of any of claims 1 to 6, wherein, in the turning travel mode, the controller
detects the two crop rows in a next instance of the inter-row travel mode based on the sensor data being consecutively output from the exterior sensor,
sets the target path in the next instance of the inter-row travel mode in between the two detected crop rows,
calculates a curvature of the target path in the next instance of the inter-row travel mode having been set; and
the plurality of conditions further include
a third condition that the curvature of the target path in the next instance of the inter-row travel mode is smaller than a third threshold.

11. The work vehicle of claim 10, wherein, in the turning travel mode, the controller halts the work vehicle when the third condition is not satisfied.

12. The work vehicle of any of claims 1 to 6, wherein, when the work vehicle has an implement linked thereto,
in the turning travel mode, the controller
detects the two crop rows in a next instance of the inter-row travel mode based on the sensor data being consecutively output from the exterior sensor, and
calculates a distance between the two detected crop rows in the next instance of the inter-row travel mode; and
the plurality of conditions further include
a fourth condition that a width of the implement is smaller than an interval between the two crop rows in the next instance of the inter-row travel mode.

13. The work vehicle of claim 12, wherein, in the turning travel mode, the controller halts the work vehicle when the fourth condition is not satisfied.

14. The work vehicle of any of claims 1 to 6, wherein, in the inter-row travel mode and in the turning travel mode, the controller halts the work vehicle in any of the following cases:
when an obstacle is detected based on the sensor data;
when a fuel of the work vehicle is smaller than a predetermined amount;
when an amount of material possessed by the work vehicle is smaller than a predetermined amount;
when a problem of the work vehicle is detected;
when an instruction to halt is received from a user;
when an angle of tilt of the work vehicle is larger than a predetermined value; and
when work to be performed by the work vehicle is finished.

15. The work vehicle of any of claims 1 to 6, wherein the exterior sensor includes one or more LiDAR sensors to output point cloud data as the sensor data.

16. A control method for a work vehicle to perform self-traveling among a plurality of crop rows, the control method comprising:
controlling self-traveling of the work vehicle in an inter-row travel mode of causing the work vehicle to travel along a target path between two adjacent crop rows that are detected based on sensor data indicating a distribution of geographic features around the work vehicle, and in a turning travel mode of causing the work vehicle to turn in a headland before and after the inter-row travel mode;
in the turning travel mode, calculating an amount of positional deviation and an amount of directional deviation of the work vehicle with respect to a target path in a next instance of the inter-row travel mode based on the sensor data; and
switching from the turning travel mode to the inter-row travel mode upon satisfying a plurality of conditions including:
a first condition that the amount of positional deviation is smaller than a first threshold; and
a second condition that the amount of directional deviation is smaller than a second threshold.
